(19) Europäisches Patentamt / European Patent Office / Office européen des brevets

(11) **EP 3 982 531 B1**

(12) **EUROPEAN PATENT SPECIFICATION**

(45) Date of publication and mention
of the grant of the patent:
**27.08.2025 Bulletin 2025/35**

(21) Application number: **20201235.7**

(22) Date of filing: **12.10.2020**

(51) International Patent Classification (IPC):
**H02M 7/483** (2007.01)    **H02M 1/00** (2006.01)
**H02M 7/49** (2007.01)

(52) Cooperative Patent Classification (CPC):
**H02M 7/4835; H02M 1/0009; H02M 7/49**

(54) **POWER CONVERTERS**

**STROMWANDLER**

**CONVERTISSEURS DE PUISSANCE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.04.2022 Bulletin 2022/15**

(73) Proprietor: **GE Energy Power Conversion Technology Ltd**
**Rugby, Warwickshire CV21 1BD (GB)**

(72) Inventors:
• **Geske, Martin**
  **12277 Berlin (DE)**
• **Reichhold, Gregory**
  **12277 Berlin (DE)**

(74) Representative: **Serjeants LLP**
**Dock**
**75 Exploration Drive**
**Leicester, LE4 5NU (GB)**

(56) References cited:
EP-A1- 3 352 359    EP-A1- 3 544 171
US-A1- 2012 275 202

• CIFTCI BARIS ET AL: "Simple Distributed Control for Modular Multilevel Converters", 2019 21ST EUROPEAN CONFERENCE ON POWER ELECTRONICS AND APPLICATIONS (EPE '19 ECCE EUROPE), EPE ASSOCIATION, 3 September 2019 (2019-09-03), XP033665726, DOI: 10.23919/EPE.2019.8915488

• MATHE LASZLO ET AL: "Control of a Modular Multilevel Converter With Reduced Internal Data Exchange", IEEE TRANSACTIONS ON INDUSTRIAL INFORMATICS, IEEE SERVICE CENTER, NEW YORK, NY, US, vol. 13, no. 1, 1 February 2017 (2017-02-01), pages 248 - 257, XP011641042, ISSN: 1551-3203, [retrieved on 20170210], DOI: 10.1109/TII.2016.2598494

• PARK CHANG-HWAN ET AL: "Back-to-Back 31 Level Modular Multilevel Converter with EtherCAT Communication", 2019 IEEE ENERGY CONVERSION CONGRESS AND EXPOSITION (ECCE), IEEE, 29 September 2019 (2019-09-29), pages 1032 - 1039, XP033666863, DOI: 10.1109/ECCE.2019.8913080

• SHAOJUN HUANG ET AL: "A new method to implement resampled uniform PWM suitable for distributed control of modular multilevel converters", IECON 2013 - 39TH ANNUAL CONFERENCE OF THE IEEE INDUSTRIAL ELECTRONICS SOCIETY, IEEE, 10 November 2013 (2013-11-10), pages 228 - 233, XP032539704, ISSN: 1553-572X, [retrieved on 20131230], DOI: 10.1109/IECON.2013.6699140

• YANG SHUNFENG ET AL: "Distributed Control for a Modular Multilevel Converter", IEEE TRANSACTIONS ON POWER ELECTRONICS, INSTITUTE OF ELECTRICAL AND ELECTRONICS ENGINEERS, USA, vol. 33, no. 7, 1 July 2018 (2018-07-01), pages 5578 - 5591, XP011679912, ISSN: 0885-8993, [retrieved on 20180319], DOI: 10.1109/TPEL.2017.2751254

EP 3 982 531 B1

## Description

Technical Field

The present invention relates to power converters, and in particular to voltage source converters (VSCs) that include a plurality of series-connected converter units operated with distributed current control.

The VSCs can be modular multi-level converters (MMCs) where the converter units are submodules that are connected together in series to define a converter arm of the MMC. The series-connected converter units can also be conventional VSCs such as two-level or multi-level converters with separate power supply infeed, for example.

Background Art

MMCs are well known for various medium- and high-power applications and have been implemented as voltage source converters (VSCs) for:

- high voltage direct current (HVDC) transmission systems,
- variable speed drives (VSDs), e.g., for driving electrical machine and other electrical loads,
- direct AC/AC power conversion, e.g., for supplying AC power to the overhead line of electric rail networks or industrial equipment, and
- static synchronous compensators (STATCOMs) for regulating AC transmission networks, for example.

A typical MMC includes at least one converter arm with a plurality of series-connected submodules (sometimes called switching modules) and an inductor. The submodules can have any suitable topology such as half-bridge, full-bridge, cross-connected, mixed-cell etc. as will be known to the skilled person. Each submodule normally has at least two controllable semiconductor switches and an energy storage device (e.g., a capacitor). In some arrangements, the semiconductor switches are connected in series and the energy storage device is connected in parallel with the series-connected semiconductor switches. According to the switching state of each submodule - as determined by the switching state of the individual semiconductor switches - the converter arm current will either charge/discharge the energy storage device or bypass the energy storage device so that its voltage is maintained. The MMC will typically have a plurality of converter arms arranged in parallel - for example converter arms may be connected in parallel between a pair of DC buses with each converter phase having an upper arm with one or more submodules and a lower arm with one or more submodules and defining an AC bus therebetween, or each converter arm may be connected at one end to a respective AC bus and connected to each other (e.g., in a star or delta configuration) or to another respective AC bus at the other end.

Because an MMC typically includes a large number of submodules, controlling the MMC using one main controller involves exchanging a large amount of data with the submodules or their local controllers for voltage balancing, protection settings, fault information and the control of the overall converter outputs, for example. The requirement to use communication protocols that are suitable for exchanging the large amount of data, and the need for the main controller to carry out the necessary calculations for converter current control for the various submodules, requires a certain amount of time, which in turn limits the dynamic response of the MMC. Accordingly, any reduction in the direct communication between the main controller and the submodules or their local controllers can reduce the required communication time and significantly improve the control dynamics. Introducing distributed current control can also reduce the computation demands on the main controller, leading to a further improvement in control dynamics.

As mentioned above, one or more local controllers are normally used to control the switching state of the submodules in a converter arm to carry out current and voltage balancing control. In particular, the local controllers can typically balance the energy of the energy storage devices by using certain switching states that increase, decrease or maintain the DC voltage of the submodules in order to balance and equalise the charge levels of the submodules in the converter arm. Each submodule can have its own local controller. Or a group of two or more submodules in the converter arm can be controlled together by a local controller. As mentioned above, each local controller can control the switching state of each associated submodule or group of submodules by controlling the switching state of the individual semiconductor switches - i.e., by controlling the individual semiconductor switches to switch to an on- or off-state as required to either charge/discharge the energy storage device or bypass the energy storage device. Each local controller can use pulse width modulation (PWM) to generate gate drive commands which are supplied to the respective gate drive unit of the semiconductor switches of each associated submodule or group of submodules. Each local controller can generate the gate drive commands according to the desired switching states of each associated submodule or group of submodules. The gate drive commands can be calculated by a respective PWM generator in response to a modulation signal. The modulation signal for each submodule can be derived to provide both current and voltage balancing control. Each modulation signal is compared with a carrier waveform to derive the gate drive commands in a known manner. Alternatively, nearest level control or sorting-based methods can be used to control the output voltage of the submodules.

Each modulation signal can be derived using a current control signal (and other signals such as a voltage balancing signal and a voltage reference signal, for example). Each local controller receives the current control signal from a main controller, e.g., a controller for the converter arm or the MMC. The current control signal is typically calculated by the main controller using a current feedback signal that is received by the main controller. The main controller typically has a control cycle time of about 100μs. Once a value for the current feedback signal is received by the main controller during a particular control cycle, it must typically wait until the next control cycle before using the received current feedback value to calculate the value of the current control signal, and then transmit the calculated current control signal value to the local controllers. This results in a significant control delay, e.g., up to 200μs in some arrangements.

Current control is centralised because the local controllers can only carry out current control for the submodule or group of submodules using the current control signal that is calculated and transmitted by the main controller for the converter arm or MMC.

VSCs are well known and typically comprise first and second DC terminals and one or more AC terminals. When operated as an inverter, the VSC can convert a DC input voltage at the first and second DC terminals to an AC output voltage at the AC terminal(s). In practice, the VSC comprises a plurality of controllable semiconductor switches that can be switched between an on-state and an off-state as required to synthesise the AC output voltage. The VSC can be a two-level or multi-level converter, for example. Suitable topologies for a multi-level converter include neutral point piloted (NPP) and neutral point clamped (NPC).

A plurality of known VSCs can be connected together in series - for example, to achieve a specific level of voltage, current or output power.

Ciftci Baris et al: "Simple Distributed Control for Modular Multilevel Converters", 2019 21st European Conference on Power Electronics and Applications (EPE '19 ECCE Europe), EPE Association, 3 September 2019, discloses distributed control for MMCs with a main controller and a plurality of local controllers for controlling the submodules. Current sensors provide current feedback signals to the main controller for current control. The main controller generates a modulation reference which is provided to the local controllers for the purpose of current control. The local controllers can carry out voltage balancing control.

Mathe Laszlo et al: "Control of a Modular Multilevel Converter with Reduced Internal Data Exchange", IEEE Transactions on Industrial Informatics, IEEE Service Center, New York, NY, US, vol. 13, no. 1, 1 February 2017, pages 248-257, discloses a plurality of local controllers that carry out voltage balancing control. Current control is carried out centrally by a main controller.

Further prior art is provided by Yang Shunfeng et al: "Distributed Control for a Modular Multilevel Converter", IEEE Transactions on Power Electronics, vol. 33, no. 7, 1 July 2018, XP011679912.

Summary of the invention

The present invention provides a power converter according to claim 1.

The present invention further provides a method of operating a power converter according to claim 12.

The fact that the at least one local controller receives the current feedback signal directly from the current sensor can be contrasted with the centralised current control for the submodules of the modular multi-level converter (MMC) described above, where a current control signal is calculated by the main controller and transmitted to each local controller during each control cycle of the main controller. The present invention provides rapid current control that is distributed through the local controllers. Delay times caused by data conversion and processing of intermediate devices such as the main controller or distribution panels is minimised, which gives a faster response time.

In practice, the period of the local control cycle can be less than about 10μs, which can result in a control response that is almost analogue.

The period of the main control cycle can be about 40-100μs.

The series-connected converter units are controlled by synchronised local controllers. Each local controller is adapted to operate individually for the current control of its associated at least one converter unit. The synchronisation of the local controllers ensures that the local controllers operate together as a single (or aggregate) controller for distributed current control. In particular, although each local controller is adapted to independently carry out current control for the associated at least one converter unit, the local controllers are operated with time-based synchronisation in order to derive a desired converter current waveform. The desired converter current waveform is derived from the output voltage of each individual converter unit in conjunction with an impedance or arm inductor as described in more detail below. In particular, the different output voltages of the converter units contribute to the overall current control. It will be readily understood that the amount of information that needs to be exchanged between the main controller and the local controllers is significantly reduced, which improves control dynamics.

Unless otherwise stated, any reference herein to components being "connected" includes both a direct and an indirect electrical connection or coupling, e.g., with the option for components to be electrically connected or coupled together by means of one or more interposing components.

Any reference herein to a "signal" includes a series of discrete values transmitted between components of the power converter or calculated by a component such as a local controller.

As used herein, "distributed current control" refers to the current control that is carried out by the synchronised local controllers acting as a single (aggregate) controller so that the series-connected converter units are controlled together in a synchronised and coordinated manner to derive a desired converter current. This distributed current control is intended to replicate the current control that would have previously been carried out by the main controller, but with significantly improved control dynamics, faster response times etc.

*Semiconductor devices:*

In each converter unit, each semiconductor device may further include an anti-parallel connected diode, i.e., a diode connected in anti-parallel with its associated controllable semiconductor switch. Controllable semiconductor switches that normally include an anti-parallel connected diode would include insulated-gate bipolar transistors (IGBTs), for example.

*Inductor:*

The converter units can be connected in series with at least one inductor.

*Modular multi-level converter:*

The power converter can be a voltage source converter (VSC) implemented as an MMC where the converter units are normally called submodules. The plurality of series-connected submodules can define a converter arm of the MMC. The converter arm can also include an inductor. The current feedback signal can be indicative of the converter arm current, i.e., the current flowing in the converter arm, and the current reference signal or information can be indicative of the desired converter arm current. The MMC can include a plurality of converter arms, which can be connected together and/or to any external circuit or load in any suitable arrangement as will be known to the skilled person.

Each submodule can include an energy storage device (e.g., a capacitor).

The submodules can be considered to be individual VSCs and can have any suitable topology such as half-bridge, full-bridge, cross-connected, mixed-cell etc. as will be known to the skilled person. Typically, each submodule will include at least two controllable semiconductor switches connected in series and an energy storage device (e.g., a capacitor) connected in parallel with the series-connected semiconductor switches. In a full-bridge topology, each submodule comprises a first leg with two controllable semiconductor switches connected in series and a second leg with two controllable semiconductor switches connected in series. The first and second legs are connected in parallel between first and second DC rails. An energy storage device (e.g., a capacitor) is connected between the first and second DC rails in parallel with both the first and second legs. If the submodule includes an auxiliary power supply, it can be connected between the first and second DC rails in parallel with the energy storage device and the first and second arms. A junction of the semiconductor switches in the first leg defines a first AC terminal and a junction of the semiconductor switches in the second leg defines a second AC terminal.

The MMC may be utilised for a wide variety of medium- and high-power applications and the converter arms may be configured accordingly for connection to an external power system, including a transmission system or power grid, and/or to an electrical load if the MMC is configured for power conversion. The converter arms may be connected together, e.g., in a delta or star configuration, if the MMC is configured as a static synchronous compensator (STATCOM). The MMC may have any suitable overall topology. The present invention is particularly applicable for MMCs that benefit from rapid current control such as voltage source converters (VSCs) for:

- high voltage direct current (HVDC) transmission systems,
- variable speed drives (VSDs), e.g., for driving electrical machine and other electrical loads,
- direct AC/AC power conversion, e.g., for supplying AC power to the overhead line of electric rail networks or industrial equipment,
- dynamic static var compensators (DSVCs) for compensation of harmonic generators such as industrial loads, and
- static synchronous compensators (STATCOMs) for regulating AC transmission or distribution networks, for example.

The distributed current control provided by the present invention is beneficial during normal operation of the MMC by providing improved disturbance rejection, active filtering and the control of higher order current harmonics, for example. During imbalanced or disturbed operation of the MMC, the distributed current control can additionally provide improved rebalancing of the energy storage devices of the submodules. During fault conditions of the MMC, the distributed current control can provide improved control of fault currents. Additionally, the communication effort between the main controller and the local controllers is significantly reduced as rebalancing of the energy storage devices and current control is carried out locally by the local controllers.

*Voltage source converter:*

The power converter can be a VSC where the converter units can be implemented as individual VSCs.

When implemented as individual VSCs, each converter unit can include a plurality of legs. Each leg can include two or more controllable semiconductor switches and define an AC terminal of the converter unit. Each leg can be connected in parallel between first and second DC rails. The converter units can be two-level or multi-level converters, for example. Suitable topologies for a multi-level converter include neutral point piloted (NPP) and neutral point clamped (NPC). But it will be readily understood that any suitable topology as will be well known to the skilled person can be used.

Each individual VSC can include an energy storage device (e.g., a capacitor) that is charged using an external power source or separate power supply infeed. The energy storage device can be connected between the first and second DC rails in parallel with the plurality of legs.

In one arrangement, the power supply infeed can include a power converter that is connected to first and second DC rails of the respective VSC. The power converter can be a diode bridge or an active rectifier such as a two-level or multi-level converter, for example. In one arrangement, the AC-side of each power converter can be connected to a respective output winding of a transformer so that the individual VSCs are insulated from each other. In other words, the transformer can have a plurality of output windings that can be inductively coupled to an input winding. The input winding of the transformer can be connected to an external power system. It will be readily understood that other power supply infeed arrangements are possible.

The corresponding submodules of the MMC do not include such a power supply infeed and are therefore often described as being "floating".

The power converters implemented using individual VSCs can be used as:

- VSCs for high voltage direct current (HVDC) transmission systems, and
- variable speed drives (VSDs), e.g., for driving electrical machine and other electrical loads, for example.

*Converter unit connection:*

As described in more detail below, the converter units (or submodules in the case of an MMC) can be connected in series on the AC-side (i.e., with a series connection between respective AC terminals) or on the DC-side (i.e., with a series connection between respective DC terminals or rails). A series connection on the AC-side can derive an output voltage that includes an AC component and optionally also a DC component.

The converter units (or submodules) can be connected in series on the AC-side. If each converter unit includes a first leg defining a first AC terminal and a second leg defining a second AC terminal, at least one of the first and second AC terminals of each converter unit can be connected to an AC terminal of an adjacent converter unit to define a converter arm. If the converter arm includes n converter units, the first AC terminal of the first converter unit in the series (i.e., the converter unit at a first end of the converter arm) can be connectable to an AC bus or a DC bus - e.g., forming part of an external power system. The second AC terminal of the $n$th converter unit in the series (i.e., the converter unit at a second end of the converter arm) can be connectable to an AC bus or a DC bus - e.g., forming part of an external power system - or to another converter arm of the power converter. For all other converter units (i.e., where $n$=1, 2, ..., ($n$-1)) the second AC terminal of the respective converter unit is connected to the first AC terminal of the next converter unit in the converter arm. That is, the second AC terminal of the first converter unit is connected to the first AC terminal of the second converter unit, the second AC terminal of the second converter unit is connected to the first AC terminal of the third converter unit, the second AC terminal of the third converter unit is connected to the first AC terminal of the fourth converter unit, and so on, until the ($n$-1)th converter unit.

The converter units can be connected in series on the DC-side. If each converter unit includes first and second DC rails defining first and second DC terminals, at least one of the first and second DC terminals of each converter unit can be connected to a DC terminal of an adjacent converter unit. If the power converter includes n converter units, the first DC terminal of the first converter unit in the series can be connectable to a DC bus - e.g., forming part of an external power system. The second DC terminal of the nth converter unit in the series can be connectable to another DC bus - e.g., forming part of an external power system. For all other converter units (i.e., where $n$=1, 2, ..., ($n$-1)) the second DC terminal of the respective converter unit is connected to the first DC terminal of the next converter unit in the series. That is, the second DC terminal of the first converter unit is connected to the first DC terminal of the second converter unit, the second DC terminal of the second converter unit is connected to the first DC terminal of the third converter unit, the second DC terminal of the third converter unit is connected to the first DC terminal of the fourth converter unit, and so on, until the ($n$-1)th converter unit. Each converter leg of each converter unit can define an AC terminal. The AC terminals of the converter units can be connected together or combined on the AC-side, e.g., using a transformer, multi-stage transformer or interface reactors.

In each case, the current feedback signal can be indicative of the converter arm current, i.e., the current flowing in the series-connected converter units, and the current reference signal or current reference information can be indicative of the desired converter arm current. Alternatively, the current feedback signal can be indicative of a different converter current, e.g., the current flowing into or out of the power converter as a whole.

*Main controller:*

The main controller can be a controller for the power converter or for the converter arm. The main controller can have any suitable implementation.

*Local controllers:*

Each local controller can be associated with one converter unit of the power converter. But in practice, it is likely that each local controller will be associated with two or more converter units of the power converter that can be controlled together as a group.

In one arrangement, all of the local controllers will receive the current feedback signal directly from the current sensor. In an alternative arrangement, the at least one local controller that receives the current feedback signal directly from the current sensor can send the current feedback signal to one or more other local controllers (so-called "daisy chain" arrangement).

The local controllers can be implemented as programmable logic devices (e.g., complex programmable logic devices (CPLDs) or field programmable gate arrays (FPGAs) that are semiconductor devices that are based around a matrix of configurable logic blocks). The programmable logic devices should support parallel processing to facilitate calculation, sending and receiving of data and the sending of gate drive commands to control the switching of the semiconductor switches of each associated converter unit as parallel processes. The local controllers can also be implemented as digital signal processors (DSPs) or as micro or multicore processing units, for example. Each local controller can use pulse width modulation (PWM) or any other suitable control strategy to generate the gate drive commands which are supplied to the respective gate drive unit of the semiconductor switches of each associated converter unit.

*Current sensor:*

The current sensor can be implemented as one or more digital interfaces that are associated with at least one analogue current transducer for measuring the converter current. The current sensor can include an analogue-to-digital converter, which can be implemented as part of the analogue current transducer or as a separate device.

The analogue-to-digital converter can convert the analogue current measurements from the current transducer into the current feedback signal which is then transmitted as data with or without a suitable protocol header. The current feedback signal can be transmitted in parallel using multiple channels, e.g., where the same data is transmitted in parallel to each local controller at the same time using a respective signal connection such as a fibre optic cable - see below. The current feedback signal can include a synchronisation signal or data for synchronising the local controllers.

The current sensor can also be integrated into a local controller - or put another way, the current sensor can have the additional functionality of a local controller and can generate gate drive commands for associated converter units. Component parts of the current sensor can be co-located or distributed through the power converter. In particular, the current transducer and the analogue-to-digital converter can be separate devices that are separately located and connected by a suitable connection. Just the analogue-to-digital converter can be integrated into another component such as a local controller or the main controller, for example.

*Signal connection between the local controllers and the current sensor:*

One or more of the local controllers can be directly connected to the current sensor by a suitable signal connection which allows the current feedback signal to be received from the current sensor. In one arrangement, each local controller is directly connected to the current sensor by its own signal connection so that the same data can be transmitted in parallel to each local controller at the same time. But the local controllers can also be directly connected to the current sensor by a bus-type signal connection with a suitable protocol. In the case of a daisy chain arrangement, pairs or groups of two or more local controllers can be connected together by a suitable signal connection which allows the current feedback signal to be propagated to all local controllers in the converter arm without significant delay once it has been received by the at least one local controller.

In one arrangement, the signal connection can be a fibre optic cable which allows the current feedback signal to be transmitted as a series of values using a suitable protocol, e.g., a short protocol with a minimum overhead framework, and with a protocol header. A suitable protocol would be one that uses 4B5B line code or other self-clocking line code, for example.

In the case of a power converter with a plurality of series-connected converter units, it is not straightforward to connect each local controller to a single current sensor using an electrical (or wired) connection as the signal connection. This is because the converter units and their associated local controllers are effectively tied to different potentials. A conventional electrical connection would therefore provide a galvanic coupling between the converter units and the current sensor. A fibre optic cable can provide a galvanically-insulated connection that can be used to connect the current sensor to all of the local controllers in a preferred arrangement. However, it is possible to use an electrical connection as the signal connection if all DC voltage measurements, communication lines or cables, and the power supplies of the local controllers are galvanically isolated from the converter units - e.g., if any voltage feedback signals are transmitted from the converter units to the associated local controller through fibre optic cables as a galvanically-insulated connection.

The signal connection to the current sensor or between the local controllers can include two or more fibre optic cables or electrical connections in parallel for redundancy.

In one arrangement, the signal connection can be a wireless connection using any suitable wireless protocol.

*Additional signals transmitted by the current sensor to the local controllers:*

The local controllers can receive one or more additional signals or information from the current sensor such as:

- a synchronisation signal if this is not integrated with the current feedback signal, and
- a signal indicative of fault status, e.g., a trip signal or a failure signal. Such a signal can include information that allows it to be selectively applied by individual local controllers so that one or more local controllers can be controlled to stop generating gate drive commands for the associated converter units and/or one or more other local controllers can be controlled to put the associated converter units into a bypass switching state, for example. Information indicative of a fault status can also be included in any protocol header for the current feedback signal.

*Signal connection between the main controller and the current sensor:*

The main controller can receive the current feedback signal directly from the current sensor or from one of the local controllers. The main controller can be connected to the current sensor by a suitable signal connection which allows it to receive the current feedback signal. In one arrangement, the main controller is directly connected to the current sensor by its own signal connection - in parallel with the signal connections that directly connect each local controller to the current sensor - so that the same data can be transmitted in parallel to the main controller and to each local controller at the same time. But the main controller can also be directly connected to the current sensor by a bus-type signal connection with a suitable protocol.

The signal connection can be a fibre optic cable, an electrical (or wired) connection, or a wireless connection using any suitable wireless protocol, for example.

The signal connection can include two or more fibre optic cables or electrical connections in parallel for redundancy.

*Additional signals transmitted by the main controller to the current sensor:*

In some arrangements, the main controller can use the signal connection to send one or more signals to the current sensor, e.g., a signal for controlling the synchronisation of the local controllers, a signal for generating a trip/failure status etc. Any additional signals can be transmitted from the main controller to the current sensor using a suitable protocol, e.g., an ethernet-based protocol operating within the main control cycle.

*Signal connection between the local controllers and the main controller:*

The local controllers can be connected to the main controller by a suitable signal connection which allows the local controllers to receive the current reference signal or current reference information. The signal connection can also allow other signals or information to be transferred between the local controllers and the main controller - see below. Any signals can be transmitted between the main controller and the local controllers using a suitable protocol, e.g., an ethernet-based protocol operating within the main control cycle.

The signal connection can be a fibre optic cable, an electrical (or wired) connection, or a wireless connection using any suitable wireless protocol, for example.

The signal connection can include two or more fibre optic cables or electrical connections in parallel for redundancy.

*Current control:*

The current control for each associated converter unit can be carried out using a current control signal that is calculated locally by each local controller. In particular, the calculated current control signal can be used to derive a modulation signal (or modulation index). The modulation signal is used by a respective PWM generator to generate gate drive commands for the semiconductor switches of each associated converter unit. Gate drive commands are generated for each associated converter unit and put each semiconductor switch in a particular switching state. The switching states of the individual semiconductor switches define a switching state for the converter unit - which in turn defines the output voltage of the individual converter unit. The output voltage is used to control the current under consideration of an impedance or arm inductor according to conventional control principles of single VSCs.

Within each PWM generator, the modulation signal can be compared with at least one carrier waveform to derive the gate drive commands in a known manner. Any suitable carrier waveform can be used such as a triangular waveform, sawtooth waveform etc. Two or more carrier waveforms can be used if the series-connected converter units are multi-level converters in order to generate the various output voltage levels. The carrier waveforms for each of the series-connected converter units are shifted (e.g., phase-shifted or level-shifted) to generate uniformly distributed switching events. The PWM generators can use phase-shifted carrier PWM or phase disposition PWM, for example. The shift in the carrier waveforms corresponds to the shift that would be applied if the current control was carried out by the main controller in a known manner, but without the need to exchange significant amounts of information that limits control dynamics. The preferably uniform distribution of related switching events is defined by the carrier shift information provided by the main controller and the synchronization of the local controllers. This allows the local controllers to individually control the converter arm current based on the same measured current feedback signal with a common impedance or arm inductor.

Each local controller can include a current controller which calculates the current control signal. The current controller can have any suitable topology and can include one or more sub-controllers such as proportional-integral (or PI) controller or proportional-resonant (or PR) controllers, for example.

In one arrangement, the main controller can transmit a current reference signal to each local controller.

According to the invention, the main controller transmits current reference information to each local controller. Each local controller can then use the current reference information to locally calculate a current reference signal. Each local controller can include a current reference calculator which calculates the current reference signal from the current reference information provided by the main controller. The current reference information can include one or more of angle information, frequency information and amplitude information, for example.

The current reference signal can be a series of variable values (e.g., for an AC output) or a series of constant values (e.g., for a DC output).

The difference between the (received or locally-calculated) current reference signal and the current feedback signal can be calculated by each local controller (e.g., using a summing node) and supplied to the current controller as an input. The output of the current controller is the current control signal, which in practice is a first series of calculated voltage values that can be used to derive the modulation signal.

Each local controller receives the current reference signal or the current reference information from the main controller each main control cycle, e.g., about every 40-100μs. According to the invention, the received or locally-calculated current reference signal is continuously updated by each local controller. Each local controller also receives a current feedback signal from the current sensor at least each local control cycle. (In some cases, the current sensor may provide two or more values of current feedback signal - and any additional signals or information - during a single control cycle of the local controller.) This means that the current controller can calculate a current control signal each local control cycle using the current feedback signal that is indicative of the converter current (e.g., the converter arm current). This, in turn, means that the modulation signal that is used by each PWM generator to generate the gate drive commands for the associated converter unit can be calculated each local control cycle. As noted above, the period of the local control cycle is typically less than

about 10μs and in some cases may even be as small as 1μs to give an almost analogue control response. It can therefore be understood that the distributed current control carried out by the local controllers using the associated converter units can respond rapidly to changes in measured current on the basis of the current feedback signal received from the current sensor, with an additional response arising from changes in the current reference signal or current reference information received from the main controller each main control cycle. This additional response can include abrupt changes in current demand to which the distributed current control can respond rapidly, as well as more gradual changes in current demand.

*Voltage balancing control:*

Each local controller can receive a voltage feedback signal from each associated converter unit that is indicative of the measured DC voltage of the converter unit. For example, if each local controller is associated with $p$ converter units, it can receive a first voltage feedback signal from the first converter unit that is indicative of the measured DC voltage of the first converter unit, a second voltage feedback signal from the second converter unit that is indicative of the measured DC voltage of the second converter unit, ..., and an $p$th voltage feedback signal from the pth converter unit that is indicative of the measured DC voltage of the $p$th converter unit. The individual voltage feedback signals can be used by the local controller to calculate a "local" average voltage signal that is indicative of the average of the measured DC voltage of the $p$ converter units associated with the particular local controller. Each local controller can include an average voltage calculator. The voltage feedback signals can be received by the local controller each control cycle of the local controller or multiple thereof, e.g., about every 10μs, 20μs, ..., 100μs. In practice, the DC voltages of the associated converter units can be measured faster than this, but the DC link or submodule capacitors are not typically very dynamic, and it can reduce computational overhead to coordinate the voltage feedback signals with the local control cycle. A "global" average voltage signal that is indicative of the average of the measured DC voltage of some or all of the converter units in the converter arm or the power converter as a whole can be provided to each local controller. In this arrangement, the individual voltage feedback signals or a locally-calculated average voltage signal for each local controller can be transmitted by each local controller to the main controller, for example. The main controller will use some or all of the individual feedback signals or the locally-calculated average voltage signals to calculate the "global" average voltage signal, which is then provided to each local controller each main control cycle. In an alternative arrangement, the "global" average voltage signal can be calculated by another device with a faster control cycle. For example, the current sensor could be used. The current sensor can calculate the "global" average voltage and send this back to each local controller as a series of values with a suitable protocol header.

Voltage balancing control for each associated converter unit can be carried out using a voltage balancing control signal that is calculated locally by each local controller. In particular, the voltage balancing control signal can be used together with the current control signal that is calculated by the current controller to derive the modulation signal that is used by the respective PWM generator to generate the gate drive commands for the semiconductor switches of each associated converter unit. Each local controller can include a voltage balancing controller which calculates the voltage balancing reference signal using the voltage feedback signal from an associated converter unit and either the "local" or "global" average voltage signal as appropriate.

If each local controller is associated with $p$ converter units, it can include $p$ voltage balancing controllers and $p$ PWM generators. The difference between the "local" or "global" average voltage signal and the respective voltage feedback signal can be calculated (e.g., using a respective summing node) and supplied to the respective voltage balancing controller as an input. For example, the difference between the "local" or "global" average voltage signal and the first voltage feedback signal for the first converter unit can be calculated (e.g., using a first summing node) and supplied to a first voltage balancing controller as an input, the difference between the "local" or "global" average voltage signal and the second voltage feedback signal for the second converter unit can be calculated (e.g., using a second summing node) and supplied to a second voltage balancing controller as an input, ..., the difference between the "local" or "global" average voltage signal and the $p$th voltage feedback signal for the $p$th converter unit can be calculated (e.g., using a $p$th summing node) and supplied to a $p$th voltage balancing controller as an input.

The output of the respective voltage balancing controller is the voltage balancing control signal which in practice is a second series of calculated voltage values. The respective voltage balancing control signal can be added to the current control signal from the current controller, e.g., using a respective summing node, the output of which is the modulation signal that is used by the respective PWM generator to generate the gate drive commands for the gate drivers of the controllable semiconductor switches. For example:

- a first voltage balancing control signal from the first voltage balancing controller can be added to the current control signal from the current controller, e.g., using a first summing node, the output of which is a first modulation signal that is used by a first PWM generator to generate the gate drive commands for the semiconductor switches of the first converter unit,

- a second voltage balancing control signal from the second voltage balancing controller can be added to the current control signal from the current controller, e.g., using a second summing node, the output of which is a second modulation signal that is used by a second PWM generator to generate the gate drive commands for the semiconductor switches of the second converter unit, ...,

- a $p$th voltage balancing control signal from the $p$th voltage balancing controller can be added to the current control signal from the current controller, e.g., using a $p$th summing node, the output of which is a $p$th modulation signal that is used by a $p$th PWM generator to generate the gate drive commands for the semiconductor switches of the $p$th converter unit.

The carrier waveforms for the first, second, ..., $p$th PWM generator of the local controller are phase-shifted or level-shifted and this is extended to the carrier waveforms for the PMW generators of the remaining local controllers so that all of the carrier waveforms are phase-shifted or level-shifted with respect to each other to generate uniformly distributed switching events for the series-connected converter units of the power converter.

*Voltage reference signal:*

Each local controller can also receive a voltage reference signal or voltage reference information from the main controller each main control cycle. The voltage reference signal is a third series of voltage values that is indicative of the output voltage waveform and can be added to the first and second voltage values (i.e., to the current and voltage balancing control signals) to derive the respective modulation signal, e.g., using the respective summing node. Each modulation signal is therefore indicative of the sum of the individual voltage values and is used to achieve the required output voltage with the desired current and voltage balancing control.

The main controller can transmit the voltage reference signal to each local controller.

In another arrangement, the main controller can transmit voltage reference information to each local controller. Each local controller can then use the voltage reference information to locally calculate a voltage reference signal. Each local controller can include a voltage reference calculator which calculates the voltage reference signal from the voltage reference information. The voltage reference information can include one or more of angle information, frequency information and amplitude information, for example.

The voltage reference signal can be a series of variable values (e.g., for an AC output), a series of constant values (e.g., for a DC output), or a summation thereof (e.g., for an AC output with a DC output component).

*Local calculation of the current reference signal and voltage reference signal:*

The local controllers can continuously update or calculate the current reference signal and/or the voltage reference signal within the slower control cycle time of the main controller. For example, in one arrangement where the current reference signal and the voltage reference signal are sinusoidal signals they can be continuously updated or calculated locally by each local controller on the basis of the following information, which can be provided by the main controller each main control cycle:

- angle information at the start of the control cycle (e.g., information relating to the angle θ),
- frequency information that can be used to update the angle θ within the control cycle, and
- amplitude information (e.g., x/y or r).

The angle information and frequency information can be used to define θ(t). The angle information might also be used for other purposes, e.g., by a proportional-resonant controller forming part of the current controller.

If the amplitude information is defined by a single value (e.g., r) then the generic reference signal S calculated by the local controller can be represented by:

$$S(t)=r*\cos(\theta(t))$$

or by:

$$S(t)=r*\cos(\theta(t))+\text{offset}$$

where the offset is a constant value.

According to the invention, the amplitude information is defined by two values (e.g., x/y) and the generic reference signal S can be represented by:

$$S(t)=x*\cos(\theta(t))-y*\sin(\theta(t))$$

Depending on the other control functions, x/y are typically alpha/beta or d/q, for example.

It will be readily understood that other functions could be used to calculate the current reference signal and/or the voltage reference signal if they are not sinusoidal signals.

Each modulation signal can be divided by the respective voltage feedback signal before it is provided to the respective PWM generator. For example, the first modulation signal can be divided by the first voltage feedback signal, the second modulation signal can be divided by the second voltage feedback signal, ..., the *p*th modulation signal can be divided by the *p*th voltage feedback signal.

*Signals transmitted by the local controllers to the main controller or the current sensor:*

Each local controller can send one or both of the voltage feedback signals and the locally-calculated average voltage signal to the main controller each local control cycle or multiple thereof. If the current sensor is connected to the main controller, one or both of the voltage feedback signals and the average voltage signal can also be transmitted by the local controllers to the current sensor and then to the main controller.

*Signals transmitted by the main controller to the local controllers:*

Each local controller can receive one or more signals from the main controller each main control cycle or multiple thereof.

The signals (or data) received from the main controller can include one or more of:

- a signal indicative of carrier waveform information for the PWM such as carrier frequency, carrier shift angle etc.,
- one or more signals for current control, e.g., a current reference signal or current reference information that can be used by each local controller to calculate a current reference signal, control parameters for the current controller such as control cycle time, proportional and/or integral gains, integrator limits, filter parameters etc.,
- one or more signals for voltage balancing control, e.g., a voltage reference signal which might be a signal indicative of the average voltage of the converter arm or the power converter (i.e., a "global" average voltage signal) or a signal indicative of control parameters for the voltage balancing controller such as control cycle time, proportional and/or integral gains, integrator limits, filter parameters etc.,
- a voltage reference signal or voltage reference information that can be used by each local controller to calculate a voltage reference signal,
- a signal indicative of the main control cycle time (e.g., a signal indicative of the start of the next control cycle when data is exchanged between the local controllers and the main controller),
- a synchronisation signal which is used to synchronise the local controllers, and
- a signal indicative of a fault status, e.g., a trip signal or a failure signal. Such a signal can include information that allows it to be selectively applied by individual local controllers so that one or more local controllers can be controlled to stop generating gate drive commands for the associated converter units and/or one or more other local controllers can be controlled to put the associated converter units into a bypass switching state, for example.

*Synchronisation of local controllers:*

Any suitable method can be used to synchronise the local controllers to each other and to the main controller. The purpose of the time-based synchronisation is to make sure that all of the local controllers are providing a synchronised current control output which allows the individual local controllers to act as a single (or aggregate) controller that provides distributed current control. Without accurate synchronisation of the local controllers, the local control cycles can diverge, and this can result in the local controllers creating a distorted output. Consequently, the synchronisation must make sure that the inputs for each local controller are latched at the same time - i.e., that each local controller uses the same current feedback signal, current and voltage reference signals etc.

In one arrangement, the local controllers can be synchronised using a synchronisation signal that is transmitted by the current sensor, the main controller or a stand-alone synchronisation controller. For example, if the current sensor is connected to each local controller (i.e., through a fibre optic cable, an electrical (or wired) connection or a wireless connection) the current sensor can send a synchronisation signal to the local controllers. The sign for the synchronisation, which is used by the local controllers, can be defined by the main controller within a slower control cycle time. In the case of the "daisy chain" arrangement, the current sensor can send a synchronisation signal to the at least one local controller which will then send the synchronisation signal to one or more other local controllers without significant delay, i.e., through a fibre optic cable, an electrical (or wired) connection or a wireless connection. Alternatively, the current sensor can send the current feedback signal to the at least one local controller which will then tell the one or more other local controllers which value of current feedback signal to use for the current control (e.g., using a different protocol header). A local controller which receives the current feedback signal from the current sensor or from another local controller can be a "master" local controller and instruct one or more other local controllers (or "slave" local controllers) which value of current feedback signal to use for the current control. Each "slave" local controller can wait at each particular control cycle until the value of current feedback signal is received from a "master" local controller and can carry out the necessary calculations for local current control. If necessary, any delays introduced by the "daisy chain" arrangement can be compensated for, e.g., by using an offset parameter associated with each converter unit.

Since current control is distributed over the plurality of local controllers, care should be taken to ensure that the local controllers operate in a coordinated manner and do not conflict with each other. For example, a situation should be avoided where one local controller controls its associated converter units to generate a large positive output voltage while another local controller controls its associated converter units to generate a large negative output voltage, which compensates for the large positive output voltage. This should be prevented by proper synchronisation of the local controllers so that they all carry out current control substantially simultaneously - i.e., that their control cycles are synchronised in time - and that they use the same current feedback signal, current reference signal and any other control parameters (e.g., any constants that may be used by individual controllers such as proportional-integral controllers). To ensure that the local controllers use the same current feedback signal it is possible to:

- send each current feedback value with a distinguishing protocol header so that the local controllers wait for the expected header to arrive, or
- only send each current feedback value at trigger moments associated with the current control.

The current sensor can continuously update the protocol header (e.g., using a counter) before sending a current feedback value and without knowing about the particular control cycle of the local controllers. The local controllers can wait for a certain counter value and then use the corresponding value of the current feedback signal.

Alternatively, if the current sensor knows the particular control cycle of the local controllers it can update the protocol header at each trigger moment. For example, at each trigger moment, the current feedback signal can be transmitted with a protocol header which indicates that the value is to be used for current control. Between each trigger moment, the current feedback signal can be transmitted with a different header which indicates that the value is to be used for other functions - i.e., for functions other than current control. This can minimise the time during which the local controllers wait for the feedback current values to be received - the delay is substantially equal to the communication time.

Each local controller can also send a request signal to the current sensor for each trigger moment with the current sensor subsequently sending a current feedback value in response to a request signal to all local controllers with a distinguishing protocol header.

Drawings

Figure 1 shows a first power converter according to the present invention implemented as a variable speed drive (VSD);
Figure 2 shows a second power converter according to the present invention implemented as an AC/AC converter;
Figures 3 and 4 show a third power converter according to the present invention implemented as a static synchronous compensator (STATCOM);

Figure 5 shows a first converter arm for a power converter according to the present invention implemented as a multi-level modular converter (MMC) with a plurality of series-connected submodules;

Figure 6 shows a second converter arm for a power converter according to the present invention with a plurality of series-connected voltage source converters (VSCs);

Figure 7 shows a current sensor, main controller and local controllers for controlling a converter arm of an MMC according to the present invention;

Figure 8A shows a first arrangement of a local controller;

Figure 8B shows a second arrangement of a local controller; and

Figure 9 shows current and modulation waveforms for the operation of a power converter according to the present invention.

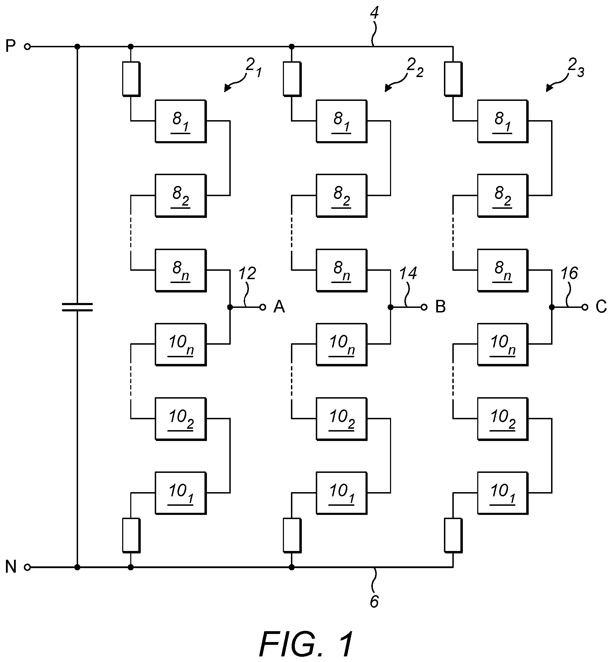

Figure 1 shows a power converter implemented as a variable speed drive (VSD).

The power converter includes three converter arms $2_1$, $2_2$ and $2_3$ connected in parallel between first and second direct current (DC) buses 4, 6. Each converter arm is divided into an upper arm and a lower arm. Each upper arm includes n series-connected converter units (or submodules) $8_1$, $8_2$, ..., $8_n$ and each lower arm includes n series-connected converter units (or submodules) $10_1$, $10_2$, ..., $10_n$, where n is any suitable integer. Each converter arm includes an inductor.

The connection between the upper arm and the lower arm of the first converter arm $2_1$ defines a first alternating current (AC) bus 12. The connection between the upper arm and the lower arm of the second converter arm $2_2$ defines a second AC bus 14. The connection between the upper arm and the lower arm of the third converter arm $2_3$ defines a third AC bus 16. The first, second and third AC buses 12, 14 and 16 can be connected to a three-phase AC load or a three-phase AC supply. The first and second DC buses 4 and 6 can be connected to a DC load or a DC supply and can include a DC link with one or more energy storage devices (e.g., capacitors).

The power converter can convert a DC input voltage to an AC output voltage or *vice versa* by operating the converter units $8_2$, ..., $8_n$ and $10_2$, ..., $10_n$ in a manner well known to the skilled person.

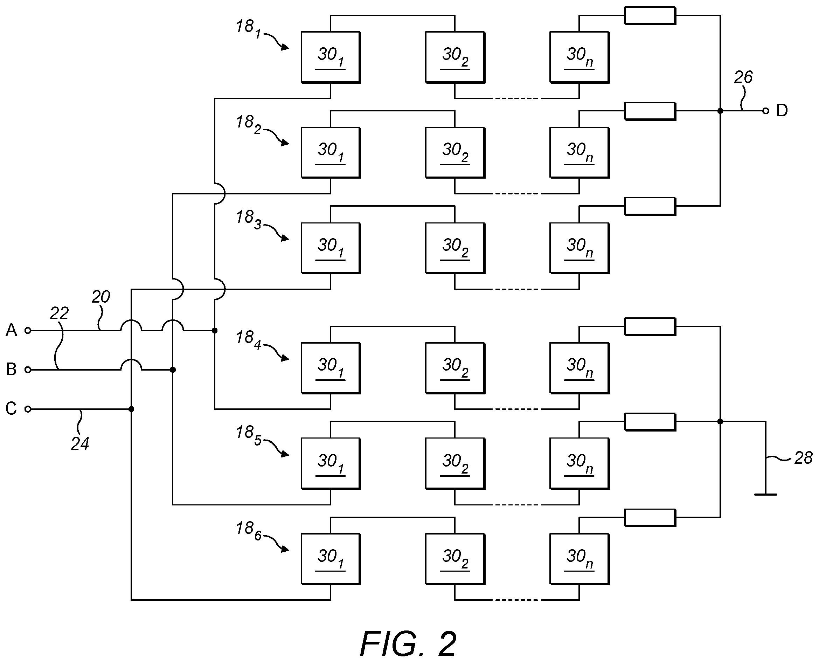

Figure 2 shows a power converter implemented as an AC/AC converter. The power converter includes six converter arms $18_1$, $18_2$, ..., $18_6$. The first and fourth converter arms $18_1$ and $18_4$ are connected in parallel to a first AC bus 20 at a first end. The second and fifth converter arms $18_2$ and $18_5$ are connected in parallel to a second AC bus 22 at a first end. The third and sixth converter arms $18_3$ and $18_6$ are connected in parallel to a third AC bus 24 at a first end. The first, second and third converter arms $18_1$, $18_2$ and $18_3$ are connected to a fourth AC bus 26 at a second end. The fourth, fifth and sixth converter arms $18_4$, $18_5$ and $18_6$ are connected to ground 28 at a second end.

Each converter arm $18_1$, $18_2$, ..., $18_6$ includes n series-connected converter units (or submodules) $30_1$, $30_2$, ..., $30_n$, where n is any suitable integer. Each converter arm includes an inductor.

The power converter can convert a three-phase AC input voltage to a single-phase AC output voltage at a different frequency by operating the converter units $30_2$, ..., $30_n$. In one example, the power converter can be used to supply AC power from a power grid operating at 50 Hz to the overhead line of an electric rail network operating at 16.7 Hz.

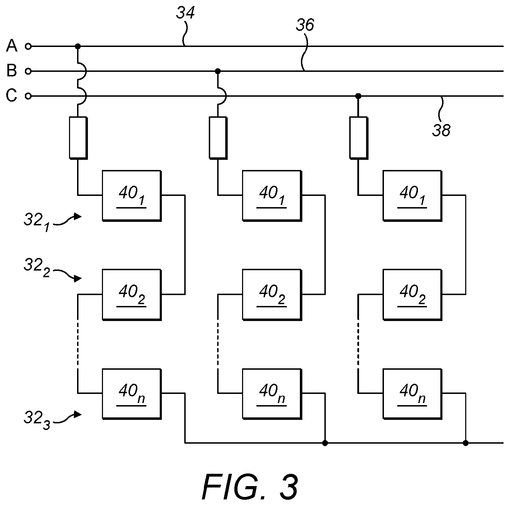

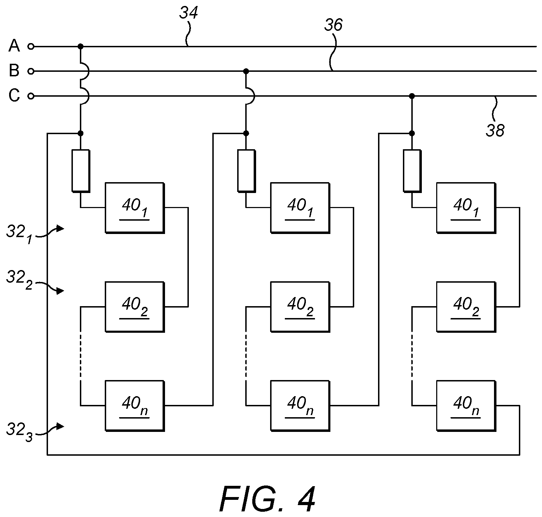

Figures 3 and 4 show a power converter implemented as a static synchronous compensator (STATCOM).

Each power converter includes three converter arms $32_1$, $32_2$ and $32_3$. The first converter arm $32_1$ is connected to a first AC bus 34 at a first end. The second converter arm $32_2$ is connected to a second AC bus 36 at a first end. The third converter arm $32_3$ is connected to a third AC bus 38 at a first end.

In the power converter shown in Figure 3, the first, second and third converter arms $32_1$, $32_2$ and $32_3$ are connected together in a star configuration at their second ends. In the power converter shown in Figure 4, the first, second and third converter arms $32_1$, $32_2$ and $32_3$ are connected together in a delta configuration at this second ends.

Each converter arm $32_1$, $32_2$ and $32_3$ includes n series-connected converter units (or submodules) $40_1$, $40_2$, ..., $40_n$, where n is any suitable integer. Each converter arm includes an inductor.

By operating the converter units $40_2$, ..., $40_n$ the power converter can act as a source or sink of reactive AC power for regulating an AC transmission network, for example.

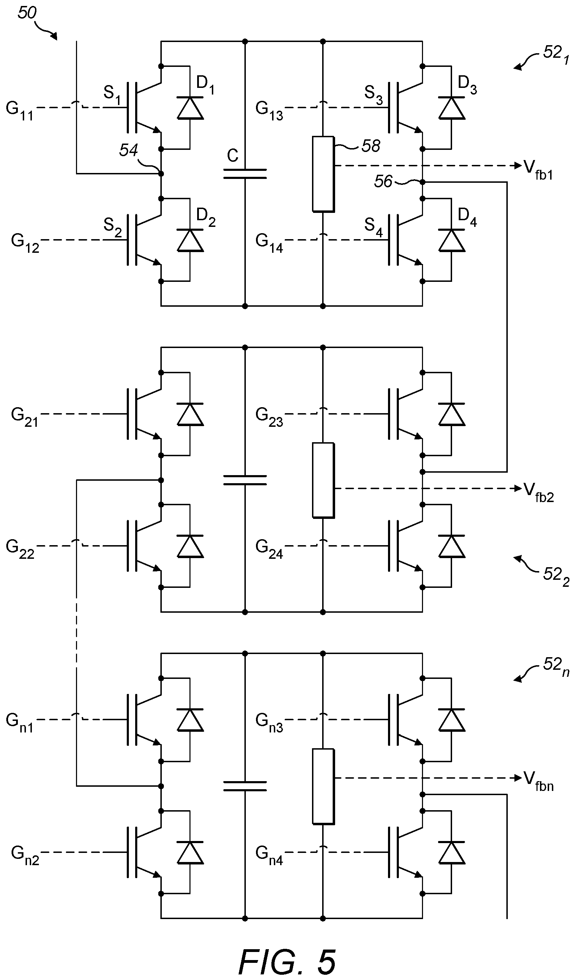

Figure 5 shows a generic first converter arm 50 that can be utilised in any of the power converters shown in Figures 1 to 4 when implemented as a modular multi-level converter (MMC). The converter arm 50 includes n series-connected submodules $52_1$, $52_2$, ..., $52_n$, where n is any suitable integer.

Each submodule $52_1$, $52_2$, ..., $52_n$ is shown as having a full-bridge topology. But it will be readily understood that other suitable topologies can also be used. In the full-bridge topology, each submodule comprises a first leg with two controllable semiconductor switches $S_1$ and $S_2$ connected in series and a second leg with two controllable semiconductor switches $S_3$ and $S_4$ connected in series. Each semiconductor switch is shown as an IGBT with an anti-parallel connected diode $D_1$, $D_2$, ..., $D_4$, but it will be readily understood that other controllable semiconductor switches can be used.

The first and second arms are connected in parallel. An energy storage device (e.g., a capacitor C) is connected in parallel with both the first and second legs. The semiconductor switches $S_1$, $S_2$, ..., $S_4$ of each submodule $52_1$, $52_2$, ..., $52_n$ are controlled by respective gate drive commands $G_{11}$, $G_{12}$, $G_{13}$, $G_{14}$, $G_{21}$, $G_{22}$, ..., $G_{n4}$ as shown to be switched between an on-state and an off-state (i.e., turned on and off) to selectively charge, discharge or bypass the capacitor C.

A junction of the semiconductor switches $S_1$ and $S_2$ in the first leg defines a first AC terminal 54 and a junction of the semiconductor switches $S_3$ and $S_4$ in the second leg defines a second AC terminal 56.

The first AC terminal 54 of the submodule $52_1$ (i.e., the submodule at a first end of the converter arm 50) is connected to an AC bus or a DC bus as shown in Figures 1 to 4. The second AC terminal of the $n$th submodule $52_n$ (i.e., the submodule at a second end of the converter arm 50) is connected to an AC bus or a DC bus - as shown in Figures 1 and 2 - or to another converter arm of the MMC as shown in Figures 3 and 4. For all other submodules $52_1$, $52_2$, ..., $52_{(n-1)}$, the second AC terminal is connected to the first AC terminal of the next submodule in the converter arm. That is, the second AC terminal 56 of the first submodule $52_1$ is connected to the first AC terminal of the second submodule $52_2$, the second AC terminal of the second submodule $52_2$ is connected to the first AC terminal of the third submodule, and so on, until the $n$th submodule $52_n$.

Each submodule $52_1$, $52_2$, ...., $52_n$ includes a voltage sensor 58 which provides a respective voltage feedback signal $V_{fb1}$, $V_{fb2}$, ..., $V_{fbn}$.

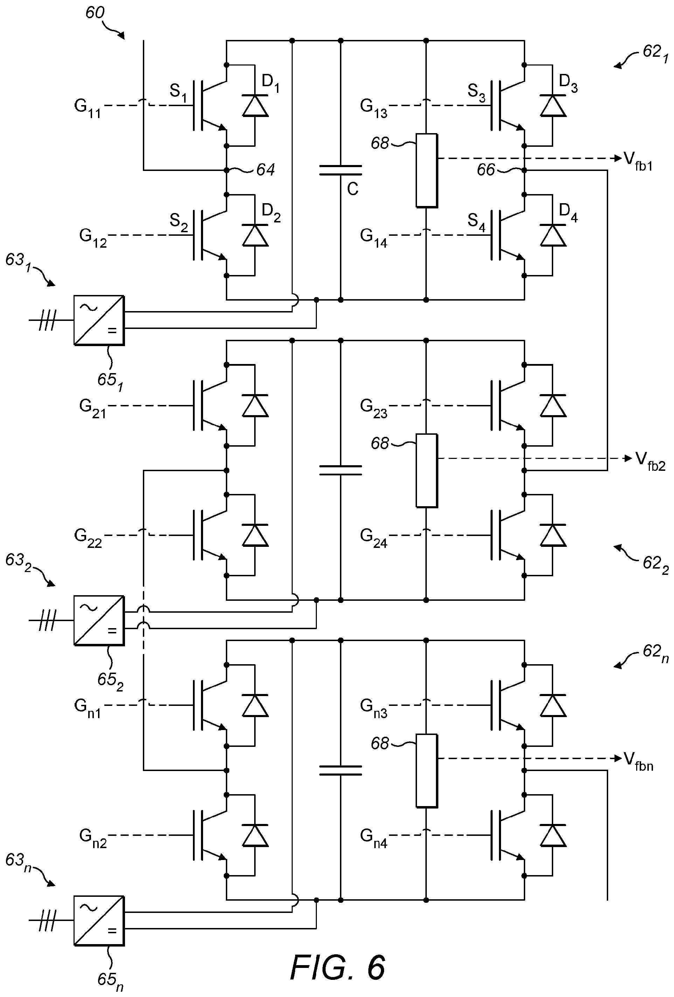

Figure 6 shows a generic second converter arm 60 that can be utilised in any of the power converters shown in Figures 1 to 4. The converter arm 60 includes n series-connected converter units $62_1$, $62_2$, ..., $62_n$, where $n$ is any suitable integer, which are implemented as individual voltage source converters (VSCs).

Each converter unit $62_1$, $62_2$, ..., $62_n$ is shown as having a two-level topology with two output voltage levels. But it will be readily understood that other suitable topologies can also be used, including multi-level topologies that will provide three or more output voltage levels. In the two-level topology, each converter unit comprises a first leg with two controllable semiconductor switches $S_1$ and $S_2$ connected in series and a second leg with two controllable semiconductor switches $S_3$ and $S_4$ connected in series. Each semiconductor switch is shown as an IGBT with an anti-parallel connected diode $D_1$, $D_2$, ..., $D_4$, but it will be readily understood that other controllable semiconductor switches can be used. The semiconductor switches $S_1$, $S_2$, ..., $S_4$ of each converter unit $62_1$, $62_2$, ..., $62_n$ are controlled by respective gate drive commands $G_{11}$, $G_{12}$, $G_{13}$, $G_{14}$, $G_{21}$, $G_{22}$, ..., $G_{n4}$ as shown to be switched between an on-state and an off-state (i.e., turned on and off).

The first and second legs are connected in parallel. A junction of the semiconductor switches $S_1$ and $S_2$ in the first leg defines a first AC terminal 64 and a junction of the semiconductor switches $S_3$ and $S_4$ in the second leg defines a second AC terminal 66.

An energy storage device (e.g., a capacitor C) is connected in parallel with both the first and second legs. The energy storage device of each converter unit $62_1$, $62_2$, ..., $62_n$ is charged by a separate power supply infeed $63_1$, $63_2$, ..., $63_n$. Each power supply infeed includes a power converter $65_1$, $65_2$, ..., $65_n$ (e.g., a passive rectifier such as a diode bridge or an active rectifier such as a two-level or multi-level converter). The DC terminals of each power converter $65_1$, $65_2$, ..., $65_n$ are connected to first and second DC rails of the respective converter unit as shown in Figure 6.

The first AC terminal 64 of the converter unit $62_1$ (i.e., the converter unit at a first end of the converter arm 60) is connected to an AC bus or a DC bus as shown in Figures 1 to 4. The second AC terminal of the nth converter unit $62_n$ (i.e., the converter unit at a second end of the converter arm 60) is connected to an AC bus or a DC bus - as shown in Figures 1 and 2 - or to another converter arm as shown in Figures 3 and 4. For all other converter units $62_1$, $62_2$, ..., $62_{(n-1)}$, the second AC terminal is connected to the first AC terminal of the next converter unit in the converter arm. That is, the second AC terminal 56 of the first converter unit $62_1$ is connected to the first AC terminal of the second converter unit $62_2$, the second AC terminal of the second converter unit $62_2$ is connected to the first AC terminal of the third converter unit, and so on, until the nth converter unit $62_n$.

Each converter unit $62_1$, $62_2$, ...., $62_n$ includes a voltage sensor 68 which provides a respective voltage feedback signal $V_{fb1}$, $V_{fb2}$, ..., $V_{fbn}$.

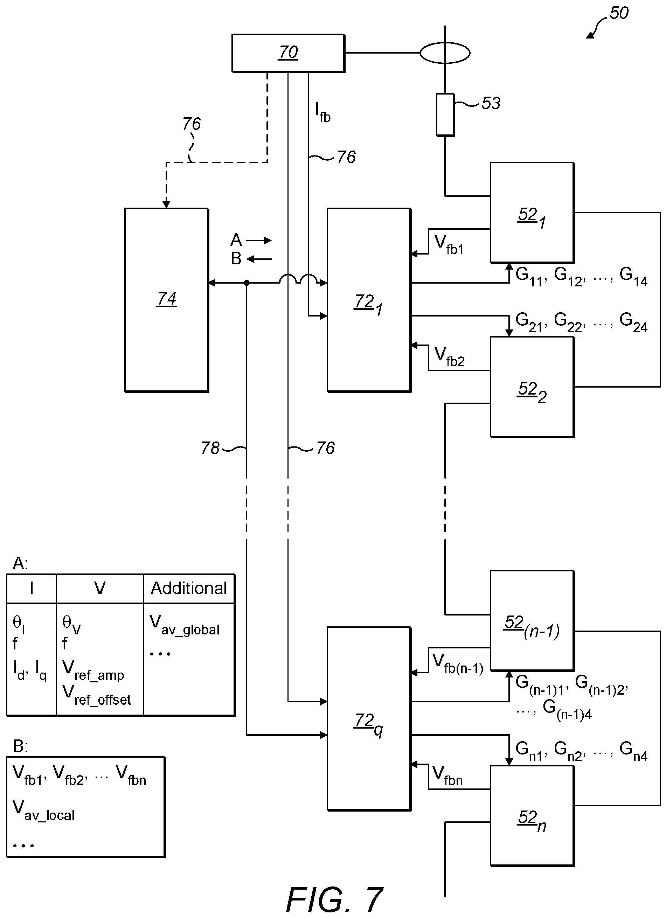

Figure 7 shows how the generic first converter arm 50 for an MMC is controlled. The MMC includes $n$ series-connected submodules $52_1$, $52_2$, ..., $52_4$, where $n$ is any suitable integer. It will be readily understood that a power converter with $n$ series-connected converter units $62_1$, $62_2$, ..., $62_n$ implemented as individual VSCs can be controlled in a similar manner.

The first converter arm 50 includes an inductor 53 as shown.

The MMC includes a current sensor 70 providing a current feedback signal $I_{fb}$ indicative of the converter arm current, i.e., the current flowing in the converter arm 50. The current sensor 70 includes an analogue current transducer and an analogue-to-digital converter which converts the analogue measurements from the current transducer into the digital current feedback signal $I_{fb}$.

The MMC includes $q$ local controllers $72_1$, ..., $72_q$, where q is any suitable integer. The local controllers $72_1$, ..., $72_q$ are implemented as programmable logic devices that support parallel processing to facilitate calculation, sending and receiving of data and the sending of gate drive commands to control the switching of the semiconductor switches of each associated submodule as parallel processes - see below. In the arrangement shown in Figure 7, each local controller $72_1$, ..., $72_q$ is used to control two submodules (e.g., $p$=2). In particular, the first local controller $72_1$ controls the submodules $52_1$

and $52_2$ and the $q$th local controller $72_q$ controls the submodules $52_{(n-1)}$ and $52_n$ as shown. But it will be understood that other arrangements are possible where each local controller is used to control one, three, four or more submodules as required (e.g., $p$=1, 3, 4, ...). As described in more detail below, each local controller $72_1$, ..., $72_q$ generates gate drive commands for controlling the switching of the semiconductor switches $S_1$, $S_2$, ..., $S_4$ of the associated submodules. That is, in this particular arrangement, the first local controller $72_1$ generates gate drive commands $G_{11}$, $G_{12}$, ..., $G_{14}$ for controlling the switching of the semiconductor switches $S_1$, $S_2$, ..., $S_4$ of the submodule $52_1$ and gate drive commands $G_{21}$, $G_{22}$, ..., $G_{24}$ for controlling the switching of the semiconductor switches of the submodule $52_2$, respectively. The $q$th local controller $72_q$ generates gate drive commands $G_{(n-1)1}$, $G_{(n-1)2}$, ..., $G_{(n-1)4}$ for controlling the switching of the semiconductor switches of the submodule $52_{(n-1)}$ and gate drive commands $G_{n1}$, $G_{n2}$, ..., $G_{n4}$ for controlling the switching of the semiconductor switches of the submodule $52_n$, respectively.

Each local controller $72_1$, ..., $72_q$ receives voltage feedback signals $V_{fb1}$, $V_{fb2}$, ..., $V_{fbn}$ from its associated submodules $52_1$, $52_2$, ..., $52_n$. In particular, the first local controller $72_1$ receives a voltage feedback signal $V_{fb1}$ from the voltage sensor 58 of the submodule $52_1$ and a voltage feedback signal $V_{fb2}$ from the voltage sensor of the submodule $52_2$. The $q$th local controller $72_q$ receives a voltage feedback signal $V_{fb(n-1)}$ from the voltage sensor 58 of the submodule $52_{(n-1)}$ and a voltage feedback signal $V_{fbn}$ from the voltage sensor of the submodule $52_n$.

The MMC includes a main controller 74 which transmits signals indicative of current reference information to each local controller $72_1$, ..., $72_q$ each control cycle of the main controller. The current reference information is indicative of a desired converter arm current and includes:

- angle information (i.e., an angle $\theta_I$),
- frequency information (i.e., a frequency f) that can be used to update the angle $\theta_I$ within the control cycle, and
- amplitude information ($I_d$, $I_q$).

The main controller 74 also transmits signals indicative of voltage reference information to each local controller $72_1$, ..., $72_q$ each control cycle of the main controller. The voltage reference information is indicative of a desired voltage and includes:

- angle information (i.e., an angle $\theta_v$),
- frequency information (i.e., a frequency f) that can be used to update the angle $\theta_V$ within the control cycle,
- amplitude information (i.e., $V_{ref\_amp}$), and
- offset information (i.e., $V_{ref\_offset}$).

The angle information for calculating the current and voltage reference signals can be the same or different.

The current feedback signal $I_{fb}$ is provided to each local controller $72_1$, ..., $72_q$. Although in the arrangement shown, each local controller receives the current feedback signal $I_{fb}$ directly from the current sensor 70, in an alternative arrangement, the current feedback signal can be provided to one or more of the local controllers which can then send the current feedback signal to one or more other local controllers. For example, the current feedback signal can be provided to the first local controller $72_1$ which can send the current feedback signal to the remaining local controllers, or to the second local controller which can send the current feedback signal to the third local controller, and so on to the qth local controller $72_q$ (so-called "daisy chain" arrangement).

Each local controller $72_1$, ..., $72_q$ is connected to the current sensor 70 by a respective fibre optic cable 76. The fibre optic cables 76 provide a galvanically-insulated connection which allows the current feedback signal $I_{fb}$ to be transmitted as data in parallel to each of the local controllers $72_1$, ..., $72_q$ at the same time using a suitable protocol, e.g., a short protocol with a minimum overhead framework, and with a protocol header.

The main controller 74 optionally also receives the current feedback signal $I_{fb}$ from the current sensor 72 through a respective fibre optic cable 76 in parallel with the local controller $72_1$, ..., $72_q$. In another arrangement, the local controllers and the main controller can be connected to the current sensor by a bus-type connection.

The local controllers $72_1$, ..., $72_q$ are connected to the main controller 74 by a fibre optic cable 78 which is a bus-type connection. The fibre optic cable 78 allows signals to be transmitted between the local controllers $72_1$, ..., $72_q$ and the main controller 74. As described above, the signals transmitted by the main controller 74 to the local controllers $72_1$, ..., $72_q$ include the current and voltage reference information.

The current and voltage information is transmitted to each local controller $72_1$, ..., $72_q$ each control cycle of the main controller 74 using a suitable protocol, e.g., an ethernet-based protocol.

The local controllers $72_1$, ..., $72_q$ can also receive one or more additional signals from the main controller 74 such as:

- a signal indicative of carrier waveform information for the PWM such as carrier frequency, carrier shift angle etc.,
- control parameters for the current controller such as control cycle time, proportional and/or integral gains, integrator limits, filter parameters etc.,
- one or more signals for voltage balancing control, e.g., a voltage reference signal which might be a signal indicative of the average voltage of the converter arm or the power converter (i.e., a "global" average voltage signal),
- a signal indicative of control parameters for the voltage balancing controller such as control cycle time, proportional and/or integral gains, integrator limits, filter parameters etc.,
- a signal indicative of main controller control cycle time,
- a synchronisation signal which is used to synchronise the local controllers, and
- a signal indicative of status, e.g., a trip signal or a failure signal.

The one or more additional signals are transmitted to each local controller $72_1$, ..., $72_q$ each control cycle of the main controller 74 or multiple thereof using a suitable protocol, e.g., an ethernet-based protocol.

The main controller 74 can also receive one or more signals from each local controller $72_1$, ..., $72_q$ such as:

- the voltage feedback signals received from the submodules associated with each local controller and/or a locally-calculated (or "local") average voltage signal - see below, and
- a signal indicative of status.

The one or more signals are transmitted to the main controller 74 each control cycle of the local controller or multiples thereof using a suitable protocol, e.g., an ethernet-based protocol.

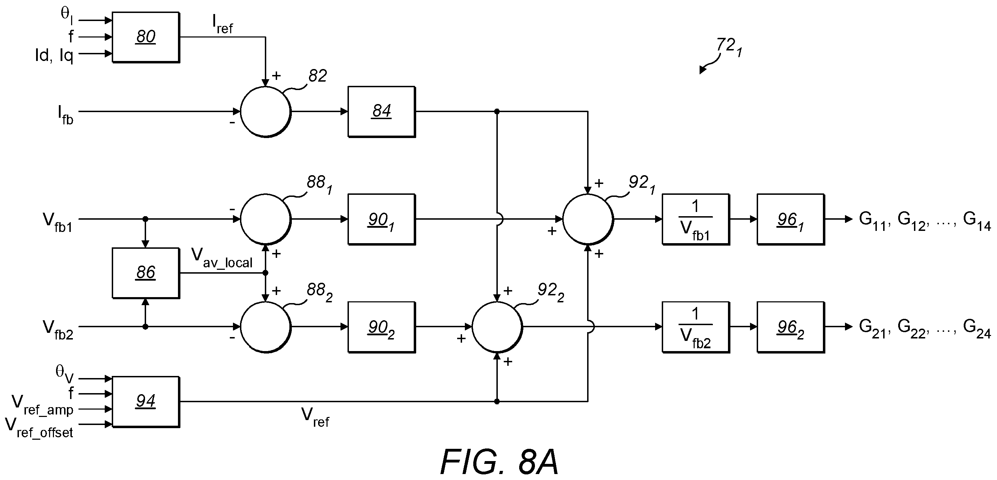

Figure 8A shows a first arrangement of the local controller $72_1$ which controls the submodules $52_1$ and $52_2$. It will be understood that the other local controllers ..., $72q$ will be implemented in the same way.

A current reference calculator 80 uses the current reference information transmitted by the main controller 74 to calculate and continuously update a current reference signal $I_{ref}$. In particular, for an AC output, the current reference signal $L_{ref}$ is a sinusoidal signal represented by:

$$I_{ref}(t)=I_d*\cos(\theta_I(t)) - I_q*\sin(\theta_I(t))$$

where:

$I_d$ is a direct-axis current amplitude,
$I_q$ is a quadrature-axis current amplitude, and
$\theta_I$ is the rotational angle of the dq reference frame.

The difference between the current reference signal $I_{ref}$ and the current feedback signal $I_{fb}$ from the current sensor 70 is calculated using a first summing node 82.

Knowing the desired output frequency, the angle $\theta_I$ can be locally and continuously updated by the local controllers so that the current reference signal $I_{ref}$ that is used by the local controllers for current control is not constant between successive control cycles of the main controller 74.

The output of the first summing node 82 is provided to a current controller 84 which outputs a current control signal. The current controller 84 can have any suitable topology and can include one or more controllers such as proportional-integral (or PI) controllers and proportional-resonant (or PR) controllers, for example. In practice, the current control signal is a series of voltage values that are calculated by the current controller 84.

The voltage feedback signals $V_{fb1}$ and $V_{fb2}$ from the respective submodules $52_1$ and $52_2$ are provided to an average voltage calculator 86 which calculates a "local" average voltage signal $V_{av\_local}$.

The difference between the locally-calculated average voltage signal $V_{av\_local}$ and the voltage feedback signal $V_{fb1}$ from the submodule $52_1$ is calculated using a second summing node $88_1$. The output of the second summing node $88_1$ is provided to a first voltage balancing controller $90_1$ which outputs a first voltage balancing control signal to a third summing node $92_1$.

The difference between the locally-calculated average voltage signal $V_{av\_local}$ and the voltage feedback signal $V_{fb2}$ from the submodule $52_2$ is calculated using a fourth summing node $88_2$. The output of the fourth summing node $88_2$ is provided to a second voltage balancing controller $90_2$ which outputs a second voltage balancing control signal to a fifth summing node $92_2$.

The first and second voltage balancing controllers $90_1$ and $90_2$ can have any suitable topology and can include one or more controllers such as proportional-integral (or PI) controllers, for example. In practice, each voltage balancing control signal is a series of voltage values that are calculated by the respective voltage balancing controller.

The current control signal output by the current controller 84 is provided to the third and fourth summing nodes $92_1$ and $92_2$ where it is added to the voltage value represented by the respective voltage balancing control signal.

A voltage reference calculator 94 uses the voltage reference information transmitted by the main controller 74 to calculate and continuously update a voltage reference signal $V_{ref}$. In particular, for an AC output, the voltage reference signal $V_{ref}$ is a sinusoidal signal represented by:

$$V_{ref}(t)=V_{ref\_amp}*\cos(\theta_V(t))+V_{ref\_offset}$$

where:

$V_{ref\_amp}$ is the amplitude of the desired output voltage,
$V_{ref\_offset}$ is an optional DC component of the desired output voltage, and
$\theta_V$ is the rotational angle which enables the continuous update of the amplitude within the slower control cycle time of the main controller.

In practice, the voltage reference signal $V_{ref}$ is a series of voltage values indicative of the desired output voltage waveform. The voltage reference signal $V_{ref}$ is provided to the third and fifth summing nodes $92_1$ and $92_2$ where it is added to the voltage values represented by the current control signal and the voltage balancing control signal.

The output of the third summing node $92_1$ is a first modulation signal which can be divided by the first voltage feedback signal $V_1$ and provided to a first PWM generator $96_1$. The output of the fifth summing node $92_2$ is a second modulation signal which can be divided by the second voltage feedback signal $V_{fb2}$ and provided to a second PWM generator $96_2$.

The first PWM generator $96_1$ uses the first modulation signal to generate the gate drive commands $G_{11}$, $G_{12}$, ..., $G_{14}$ for the semiconductor switches of the submodule $52_1$ and the second PWM generator $96_2$ uses the second modulation signal to generate the gate drive commands $G_{21}$, $G_{22}$, ..., $G_{24}$ for the semiconductor switches of the submodule $52_2$. The first and second PWM generators $96_1$ and $96_2$ use at least one suitable carrier waveform such as a triangular or sawtooth waveform, for example. The carrier waveforms for each of the submodules $52_1$, $52_2$, ..., $52_n$ can be evenly phase shifted. In other words, the carrier waveforms used by the PWM generators $96_1$, $96_2$, ..., $96_n$ are phase shifted with respect to each other based on the total number of submodules. In this way, the local controllers $72_1$, ..., $72_q$ can carry out distributed current control and voltage balancing control for the associated submodules $52_1$, $52_2$, ..., $52_n$ on the basis of the locally-calculated current and voltage balancing control signals and the voltage reference information received from the main controller 74. Phase shift information for the carrier waveforms can be transmitted to each local controller $72_1$, ..., $72_q$ by the main controller 74.

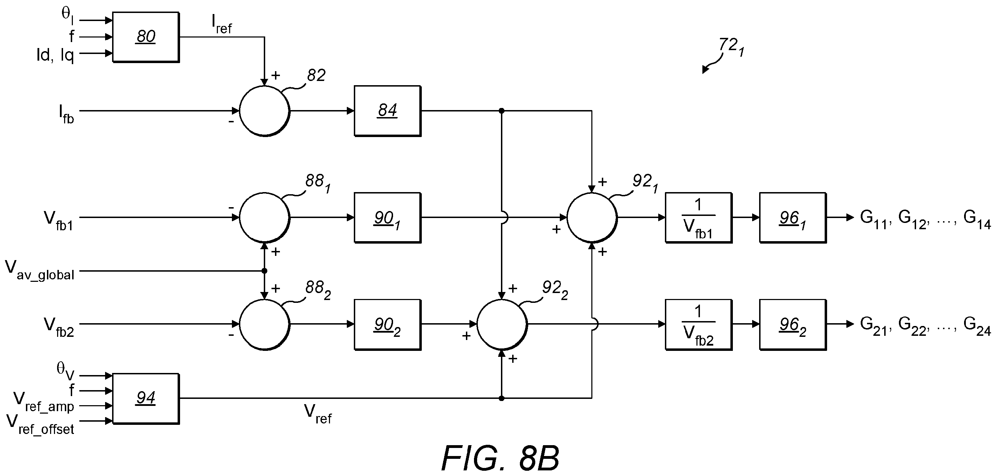

Figure 8B shows a second arrangement of the local controller $72_1$ which controls the submodules $52_1$ and $52_2$. It will be understood that the other local controllers will be implemented in the same way.

The second arrangement is similar to the first arrangement of the local controller shown in Figure 8A. The main difference is that a "global" average voltage signal $V_{av\_global}$ is received from the main controller 74 each control cycle of the main controller. The "global" average voltage signal $V_{av\_global}$ can be calculated by the main controller using individual voltage feedback signals or locally-calculated average voltage signals that are provided to the main controller by each local controller. The "global" average voltage signal can be indicative of an average voltage for the converter arm or the MMC as a whole. The "global" average voltage signal $V_{av\_global}$ is used in place of the "local" average voltage signal $V_{av\_local}$ and the average voltage calculator 86 is omitted from the local controllers.

In both arrangements, the local controller $72_1$ receives the current reference information from the main controller each control cycle of the main controller 74, e.g., about every 40-100$\mu$s, and can use the current reference information to calculate and update the current reference signal $I_{ref}$. The local controller $72_1$ receives the current feedback signal $I_{fb}$ from the current sensor 70 each control cycle of the local controller, e.g., about every 10$\mu$s or less. This means that the current controller 84 can calculate a current control signal for each control cycle of the local controller $72_1$. This, in turn, means that the modulation signals that are used by the respective PWM generators to generate the gate drive commands for the submodules can be calculated for each control cycle of the local controller $72_1$. The control cycle of the local controller $72_1$ is typically less than about 10$\mu$s and in some cases may even be as small as 1$\mu$s to give an almost analogue control response. It can therefore be understood that the current control carried out by the local controllers $72_1$, ..., $72_q$ using the associated submodules can respond rapidly to changes in measured converter arm current, with an additional response arising from changes in the current reference signal $I_{ref}$ calculated using current reference information received from the main controller 74 for each control cycle of the main controller. The modulation signals can therefore be adjusted for each control cycle of the local controller $72_1$ whereas with known controllers, the local controller can only adjust the modulation signals on the basis of a current control signal that is received from the main controller each control cycle of the main controller.

The local controllers $72_1$, ..., $72_q$ are synchronised to each other and to the main controller 74.

The synchronisation can be achieved using the current feedback signal $I_{fb}$ which is transmitted to each local controller $72_1$, ..., $72_q$ and the main controller 74. The purpose of the synchronisation is to make sure that all of the local controllers $72_1$, ..., $72_q$ are providing a synchronised controller output so that they act together as one controller. Consequently, the synchronisation must make sure that the inputs to each local controller $72_1$, ..., $72_q$ are the same - i.e., that each local controller uses the same current feedback signal $I_{fb}$ and the same current and voltage reference information. Each value of the current feedback signal $I_{fb}$ is therefore sent to the local controllers $72_1$, ..., $72_q$ with a distinguishing protocol header and the local controllers wait for the expected header to arrive before using the appropriate value of the current feedback signal $I_{fb}$ to calculate the current control signal. The current sensor 70 continuously updates the protocol header (e.g., using a counter) before sending a current feedback value and without knowing about the particular control cycle of the local controllers. The local controllers can wait for a certain counter value and then use the corresponding value of the current feedback signal. In another arrangement, each value of the current feedback signal $I_{fb}$ can be sent to the local controllers $72_1$, ..., $72_q$ at trigger moments associated with the current control. At each trigger moment, the current feedback signal $I_{fb}$ is transmitted with a protocol header which indicates that the value is to be used for current control.

Between each trigger moment, the current feedback signal $I_{fb}$ can be transmitted with a different header which indicates that the value is to be used for other functions - i.e., for functions other than current control.

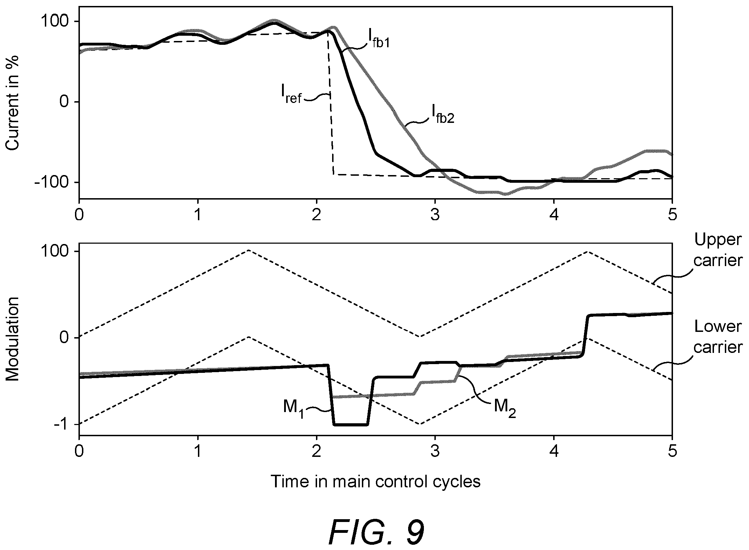

Figure 9 shows current and modulation waveforms. It can be assumed that a current reference signal $I_{ref}$ is directly given by the main controller 74 or calculated through a particular local controller (e.g., local controller $72_1$) using current reference information provided by the main controller. (In practice, it will be understood that all of the other local controllers ..., $72_q$ will also be calculating a corresponding current reference signal for the independent current control of their associated converter units.) As shown in Figure 9, the current reference signal $I_{ref}$ includes a step-change. Two current feedback signals $I_{fb1}$ and $I_{fb2}$ are shown. The current feedback signals $I_{fb1}$ and $I_{fb2}$ are indicative of the measured current in the converter arm 50 for different local control cycle periods.

The modulation waveform shows upper and lower triangular carrier waveforms for a particular submodule (e.g., submodule $52_1$).

A first modulation signal $M_1$ is calculated by the local controller $72_1$ operated with a local control cycle with a first period. A second modulation signal $M_2$ is calculated by the local controller $72_1$ operated with a local control cycle with a second period that is about twice that of the first period. In each case, the modulation signal is provided to the first PWM generator $96_1$ to generate the gate drive commands $G_{11}, G_{12}, ..., G_{14}$ for the submodule $52_1$. It will be understood that the second PWM generator $96_2$ for the local controller $72_1$ will receive a respective modulation signal. A respective modulation signal will also be calculated and provided to each PWM generator of the other submodules $52_2, ..., 52_n$. The upper and lower carrier waveforms for each PWM generator will be phase shifted as described above to provide distributed current control.

The current waveform shows how the converter arm current responds differently depending on whether the local controller $72_1$ is operated with the first local control cycle or the second local control cycle. In particular, the first current feedback signal $I_{fb1}$ (first local control cycle) tracks the current reference $I_{ref}$ significantly better than the second current feedback signal $I_{fb2}$ (second local control cycle with the longer period) in response to the step-change. The first modulation index $M_1$ also shows a significantly more dynamic response than the second modulation index $M_2$. It can therefore be seen that a significant improvement is achieved by operating the local controller $72_1$ with a shorter local control cycle period.

It will be understood that centralised current control where a current control signal is calculated by the main controller and transmitted to each local controller would have an even longer control cycle period (e.g., 40-100 $\mu$s) and would therefore be even less dynamic than the second control cycle.

**Claims**

1. A power converter comprising:

    a plurality of series-connected converter units ($52_1, 52_2, ..., 52_n; 62_1, 62_2, ..., 62_n$), each converter unit comprising a plurality of semiconductor devices, each semiconductor device including at least a controllable semiconductor switch ($S_1, S_2, ..., S_4$);
    a plurality of synchronised local controllers ($72_1, ..., 72_q$), each local controller being associated with at least one converter unit ($52_1, 52_2, ..., 52_n; 62_1, 62_2, ..., 62_n$) and adapted to control the at least one associated converter unit ($52_1, 52_2, ..., 52_n; 62_1, 62_2, ..., 62_n$) by means of a local control cycle;
    a current sensor (70) adapted to provide a current feedback signal directly to each local controller ($72_1, ..., 72_q$) at least each local control cycle, the current sensor (70) being adapted to provide the current feedback signal directly to each local controller ($72_1, ..., 72_q$) in parallel by a respective signal connection (76) between the current sensor (70) and each local controller ($72_1, ..., 72_q$), the current feedback signal being indicative of a current flowing in the series-connected converter units ($52_1, 52_2, ..., 52_n; 62_1, 62_2, ..., 62_n$), or a current flowing into or out of the power converter; and
    a main controller (74) with a main control cycle, the main controller (74) providing:

        (i) a current reference signal indicative of a desired converter current, or
        (ii) current reference information for calculating a current reference signal,

    to each local controller ($72_1, ..., 72_q$) each main control cycle,;
    wherein each local controller ($72_1, ..., 72_q$) is adapted to operate individually to:
    (i) continuously update the current reference signal received from the main controller (74), or (ii) use the current reference information received from the main controller (74) to calculate a locally-calculated current reference signal indicative of a desired converter current and continuously update the locally-calculated current reference signal; and independently carry out current control for the associated at least one converter unit ($52_1, 52_2, ..., 52_n; 62_1, 62_2, ..., 62_n$) on the basis of the current feedback signal and the updated current reference signal each local control cycle; and
    wherein the plurality of local controllers ($72_1, ..., 72_q$) are synchronised to operate together as a single controller for distributed current control of the plurality of series-connected converter units $(52_1, 52_2, ..., 52_n; 62_1, 62_2, ..., 62_n)$ to derive a desired current waveform for the power converter;

wherein the period of the local control cycle is at least less than half of the period of the main control cycle;

wherein the current reference signal received from the main controller (74), or the locally-calculated current reference signal, is a sinusoidal signal represented by:

$$S(t)=x*\cos(\theta(t))-y*\sin(\theta(t)),$$

and each local controller $(72_1, ..., 72_q)$ is adapted to continuously update or calculate the current reference signal using:

information relating to the angle $\theta$ at the start of the main control cycle,
frequency information for updating the angle $\theta$, and
amplitude information relating to values x and y,

received from the main controller (74) each main control cycle.

2. A power converter according to claim 1, wherein the converter units $(52_1, 52_2, ..., 52_n; 62_1, 62_2, ..., 62_n)$ are voltage source converters, wherein each converter unit $(52_1, 52_2, ..., 52_n; 62_1, 62_2, ..., 62_n)$ includes an energy storage device (C), and wherein each converter unit $(62_1, 62_2, ..., 62_n)$ is optionally connected to a separate power supply infeed.

3. A power converter according to any preceding claim, wherein the current sensor (70) comprises an analogue current transducer configured to measure the converter current, and an analogue-to-digital converter configured to transmit the current feedback signal.

4. A power converter according to any preceding claim, configured to transmit the current feedback signal as a series of values with a protocol header, wherein the protocol header optionally provides information indicative of a fault status for controlling the plurality of local controllers $(72_1, ..., 72_q)$.

5. A power converter according to any preceding claim, wherein the main controller (74) is adapted to receive the current feedback signal directly from the current sensor (70), optionally by means of a signal connection (76) between the current sensor (70) and the main controller (74).

6. A power converter according to any preceding claim, wherein each local controller $(72_1, ..., 72_q)$ is associated with a plurality of converter units $(52_1, 52_2, ..., 52_n; 62_1, 62_2, ..., 62_n)$ and configured to receive a voltage feedback signal from each associated converter unit $(52_1, 52_2, ..., 52_n; 62_1, 62_2, ..., 62_n)$ that is indicative of a measured DC voltage of the converter unit.

7. A power converter according to claim 8, wherein teach local controller $(72_1, ..., 72_p)$ is adapted to use the voltage feedback signals to calculate a local average voltage signal that is indicative of the average of the measured DC voltage of the plurality of converter units $(52_1, 52_2, ..., 52_n; 62_1, 62_2, ..., 62_n)$ associated with each local controller $(72_1, ..., 72_p)$, and
wherein each local controller $(72_1, ..., 72_q)$ is adapted to:
carry out voltage balancing control for the associated at least one converter unit $(52_1, 52_2, ..., 52_n; 62_1, 62_2, ..., 62_n)$ on the basis of the voltage feedback signals and the local average voltage signal each local control cycle.

8. A power converter according to claim 6, wherein the main controller (74) is adapted to provide a global average voltage signal to each local controller $(72_1, ..., 72_q)$ each main control cycle or multiple thereof, the global average voltage signal being indicative of the average of the measured DC voltage of some or all of the plurality of series-connected converter units $(52_1, 52_2, ..., 52_n; 62_1, 62_2, ..., 62_n)$, and
wherein each local controller $(72_1, ..., 72_q)$ is adapted to:
carry out voltage balancing control for the associated at least one converter unit $(52_1, 52_2, ..., 52_n; 62_1, 62_2, ..., 62_n)$ on the basis of the voltage feedback signals and the global average voltage signal each local control cycle.

9. A power converter according to any preceding claim, wherein the main controller (74) is adapted to provide a voltage reference signal, or voltage reference information for calculating a voltage reference signal, to each local controller $(72_1, ..., 72_q)$ each main control cycle, the voltage reference signal being indicative of a desired output voltage waveform;
wherein each local controller $(72_1, ..., 72_q)$ is adapted to:
optionally use the voltage reference information to calculate the voltage reference signal.

10. A power converter according to any preceding claim, configured to provide a synchronisation signal to the plurality of local controllers $(72_1, ..., 72_q)$ by at least one of the current sensor (70), the main controller (74) and a stand-alone synchronisation controller.

11. A power converter according to any preceding claim, wherein the main controller (74) is adapted to control the synchronisation for the main control cycle and to synchronise the plurality of local controllers ($72_1$, ..., $72_q$) based on a synchronisation signal for the local control cycle.

12. A method of operating a power converter comprising:

a plurality of series-connected converter units ($52_1$, $52_2$, ..., $52_n$; $62_1$, $62_2$, ..., $62_n$), each converter unit comprising a plurality of semiconductor devices, each semiconductor device including at least a controllable semiconductor switch ($S_1$, $S_2$, ..., $S_4$); and
a plurality of synchronised local controllers ($72_1$, ..., $72_q$), each local controller being associated with at least one converter unit ($52_1$, $52_2$, ..., $52_n$; $62_1$, $62_2$, ..., $62_n$) and adapted to control the at least one associated converter unit ($52_1$, $52_2$, ..., $52_n$; $62_1$, $62_2$, ..., $62_n$) using a local control cycle; and
a main controller (74) using a main control cycle;
the method comprising the steps of:

providing a current feedback signal directly to each local controller ($72_1$, ..., $72_q$) in parallel at least each local control cycle, the current feedback signal being indicative of a current flowing in the series-connected converter units ($52_1$, $52_2$, ..., $52_n$; $62_1$, $62_2$, ..., $62_n$), or a current flowing into or out of the power converter;
the main controller (74) providing:

(i) a current reference signal indicative of a desired current flowing in the series-connected converter units ($52_1$, $52_2$, ..., $52_n$; $62_1$, $62_2$, ..., $62_n$), or
(ii) current reference information for calculating a current reference signal,

to each local controller ($72_1$, ..., $72_q$) each main control cycle,
each local controller ($72_1$, ..., $72_q$) operating individually to:

(i) continuously update the current reference signal received from the main controller (74), or (ii) use the current reference information received from the main controller (74) to calculate a locally-calculated current reference signal indicative of a desired current flowing in the series-connected conver-

ter units ($52_1$, $52_2$, ..., $52_n$; $62_1$, $62_2$, ..., $62_n$) and continuously update the locally-calculated current reference signal;
independently carry out current control for the associated at least one converter unit ($52_1$, $52_2$, ..., $52_n$; $62_1$, $62_2$, ..., $62_n$) on the basis of the current feedback signal and the updated current reference signal each local control cycle; and

the plurality of local controllers ($72_1$, ..., $72_q$) being synchronised to operate together as a single controller for distributed current control of the plurality of series-connected converter units ($52_1$, $52_2$, ..., $52_n$; $62_1$, $62_2$, ..., $62_n$) to derive a desired current waveform for the power converter;
wherein the period of the local control cycle is at least less than half of the period of the main control cycle;
wherein the current reference signal received from the main controller (74), or the locally-calculated current reference signal, is a sinusoidal signal represented by:

$$S(t)=x*\cos(\theta(t))-y*\sin(\theta(t)),$$

and each local controller ($72_1$, ..., $72_q$) continuously updates or calculates the current reference signal using:

information relating to the angle $\theta$ at the start of the main control cycle,
frequency information for updating the angle $\theta$, and
amplitude information relating to values x and y,

received from the main controller (74) each main control cycle.

**Patentansprüche**

1. Stromwandler, umfassend:

eine Vielzahl von in Reihe geschalteten Wandlereinheiten ($52_1$, $52_2$, $52_n$; $62_1$, $62_2$, ..., $62_n$), wobei jede Wandlereinheit eine Vielzahl von Halbleitervorrichtungen umfasst, wobei jede Halbleitervorrichtung mindestens einen steuerbaren Halbleiterschalter ($S_1$, $S_2$, ..., $S_4$) einschließt;
eine Vielzahl von synchronisierten lokalen Steuereinheiten ($72_1$, ..., $72_q$), wobei jede lokale Steuereinheit mindestens einer Wandlereinheit ($52_1$, $52_2$, ..., $52_n$; $62_1$, $62_2$, ..., $62_n$) zugeordnet ist und angepasst ist, um die mindestens eine zugeordnete Wandlereinheit ($52_1$, $52_2$, ..., $52_n$; $62_1$, $62_2$, ..., $62_n$) mittels eines lokalen Steuerzyklus zu steuern;

einen Stromsensor (70), der angepasst ist, um mindestens bei jedem lokalen Steuerzyklus jeder lokalen Steuereinheit ($72_1$, ..., $72_q$) direkt ein Stromrückmeldesignal bereitzustellen, wobei der Stromsensor (70) angepasst ist, um jeder lokalen Steuereinheit ($72_1$, ..., $72_q$) das Stromrückmeldesignal parallel durch eine jeweilige Signalverbindung (76) zwischen dem Stromsensor (70) und jeder lokalen Steuereinheit ($72_1$, ..., $72_q$) direkt bereitzustellen, wobei das Stromrückmeldesignal einen Strom angibt, der in den in Reihe geschalteten Wandlereinheiten ($52_1$, $52_2$, ..., $52_n$; $62_1$, $62_2$, ..., $62_n$) fließt, oder einen Strom, der in oder aus dem Stromwandler fließt, und

eine Hauptsteuereinheit (74) mit einem Hauptsteuerzyklus, wobei die Hauptsteuereinheit (74) Folgendes bereitstellt:

(i) ein Stromreferenzsignal, das einen gewünschten Wandlerstrom angibt, oder
(ii) Stromreferenzinformationen zum Berechnen eines Stromreferenzsignals, an jede lokale Steuereinheit ($72_1$, ..., $72_q$) bei jedem Hauptsteuerzyklus; wobei jede lokale Steuereinheit ($72_1$, ..., $72_q$) angepasst ist, um einzeln zu arbeiten zum
(i) kontinuierlichen Aktualisieren des Stromreferenzsignals, das von der Hauptsteuereinheit (74) empfangen wird, oder (ii) Verwenden der Stromreferenzinformationen, die von der Hauptsteuereinheit (74) empfangen werden, um ein lokal berechnetes Stromreferenzsignal zu berechnen, das einen gewünschten Wandlerstrom angibt, kontinuierlichen Aktualisieren des lokal berechneten Stromreferenzsignals; und unabhängigen Ausführen von Stromsteuerung für die zugeordnete mindestens eine Wandlereinheit ($52_1$, $52_2$, $52_n$; $62_1$, $62_2$, ..., $62_n$) auf der Grundlage des Stromrückmeldesignals und des aktualisierten Stromreferenzsignals jedes lokalen Hauptsteuerzyklus; und

wobei die Vielzahl von lokalen Steuereinheiten ($72_1$, ..., $72_q$) synchronisiert sind, um zusammen als einzige Steuereinheit für verteilte Stromsteuerung der Vielzahl von in Reihe geschalteten Wandlereinheiten ($52_1$, $52_2$, ..., $52_n$; $62_1$, $62_2$, ..., $62_n$) zu arbeiten, um eine gewünschte Stromwellenform des Stromwandlers abzuleiten;

wobei die Periode des lokalen Steuerzyklus mindestens kleiner als die Hälfte der Periode des Hauptsteuerzyklus ist;

wobei das von der Hauptsteuereinheit (74) empfangene Stromreferenzsignal oder das lokal berechnete Stromreferenzsignal ein sinusförmiges Signal ist, das dargestellt wird durch:

$$S(t) = x \cdot \cos(\theta(t)) - y \cdot \sin(\theta(t)),$$

und jede lokale Steuereinheit ($72_1$, ..., $72_q$) angepasst ist, um das Stromreferenzsignal unter Verwendung von Folgendem kontinuierlich zu aktualisieren oder zu berechnen:

Informationen bezüglich des Winkels $\theta$ zu Beginn des Hauptsteuerzyklus, Frequenzinformationen zum Aktualisieren des Winkels $\theta$ und Amplitudeninformationen bezüglich der Werte x und y, die von der Hauptsteuereinheit (74) bei jedem Hauptsteuerzyklus empfangen werden.

2. Stromwandler nach Anspruch 1, wobei die Wandlereinheiten ($52_1$, $52_2$, ..., $52_n$; $62_1$, $62_2$, ..., $62_n$) Spannungsquellenwandler sind, wobei jede Wandlereinheit ($52_1$, $52_2$, ..., $52_n$; $62_1$, $62_2$, ..., $62_n$) eine Energiespeichervorrichtung (C) einschließt, und wobei jede Wandlereinheit ($62_1$, $62_2$, ..., $62_n$) wahlweise mit einer getrennten, eingespeisten Leistungszufuhr verbunden ist.

3. Stromwandler nach einem vorstehenden Anspruch, wobei der Stromsensor (70) einen Analog-Stromumformer, der konfiguriert ist, um den Wandlerstrom zu messen, und einen Analog-digital-Wandler umfasst, der konfiguriert ist, um das Stromrückmeldesignal zu übertragen.

4. Stromwandler nach einem vorstehenden Anspruch, der konfiguriert ist, um das Stromrückmeldesignal als eine Reihe von Werten mit einem Protokoll-Header zu übertragen, wobei der Protokoll-Header wahlweise Informationen bereitgestellt, die einen Fehlerstatus angeben, um die Vielzahl von lokalen Steuereinheiten ($72_1$, ..., $72_q$) zu steuern.

5. Stromwandler nach einem vorstehenden Anspruch, wobei die Hauptsteuereinheit (74) angepasst ist, um das Stromrückmeldesignal direkt vom Stromsensor (70), wahlweise mittels einer Signalverbindung (76) zwischen dem Stromsensor (70) und der Hauptsteuereinheit (74), zu empfangen.

6. Stromwandler nach einem vorstehenden Anspruch, wobei jede lokale Steuereinheit ($72_1$, ..., $72_q$) einer

Vielzahl von Wandlereinheiten ($52_1$, $52_2$, ..., $52_n$; $62_1$, $62_2$, ..., $62_n$) zugeordnet ist und konfiguriert ist, um ein Spannungsrückmeldesignal von jeder zugeordneten Wandlereinheit ($52_1$, $52_2$, ..., $52_n$; $62_1$, $62_2$, ..., $62_n$) zu empfangen, das eine gemessene Gleichstromspannung der Wandlereinheit angibt.

**7.** Stromwandler nach Anspruch 8, wobei jede lokale Steuereinheit ($72_1$, ..., $72_p$) angepasst ist, um die Spannungsrückmeldesignale zum Berechnen eines lokalen Durchschnittsspannungssignals zu verwenden, das den Durchschnitt der gemessenen Gleichstromspannungen der Vielzahl von Wandlereinheiten ($52_1$, $52_2$, ..., $52_n$; $62_1$, $62_2$, ..., $62_n$) angibt, die jeder lokalen Steuereinheit ($72_1$, ..., $72_p$) zugeordnet sind, und

wobei jede lokale Steuereinheit ($72_1$, ..., $72_q$) angepasst ist zum Durchführen von: Spannungsausgleichsteuerung für die zugeordnete mindestens eine Wandlereinheit ($52_1$, $52_2$, ..., $52_n$; $62_1$, $62_2$, ..., $62_n$) auf der Grundlage der Spannungsrückmeldesignale und des lokalen Durchschnittsspannungssignals bei jedem lokalen Steuerzyklus.

**8.** Stromwandler nach Anspruch 6, wobei die Hauptsteuereinheit (74) angepasst ist, um ein globales Durchschnittsspannungssignal an jede lokale Steuereinheit ($72_1$, $72_q$) bei jedem Hauptsteuerzyklus oder Vielfachen davon bereitzustellen, wobei das globale Durchschnittsspannungssignal den Durchschnitt der gemessenen Gleichstromspannung einiger oder aller der Vielzahl von in Reihe geschalteten Wandlereinheiten ($52_1$, $52_2$, ..., $52_n$; $62_1$, $62_2$, ..., $62_n$) angibt, und

wobei jede lokale Steuereinheit ($72_1$, ..., $72_q$) angepasst ist zum:

Durchführen von Spannungsausgleichsteuerung für die zugeordnete mindestens eine Wandlereinheit ($52_1$, $52_2$, ..., $52_n$; $62_1$, $62_2$, ..., $62_n$) auf der Grundlage der Spannungsrückmeldesignale und des globalen Durchschnittsspannungssignals bei jedem lokalen Steuerzyklus.

**9.** Stromwandler nach einem vorstehenden Anspruch, wobei die Hauptsteuereinheit (74) angepasst ist zum Bereitstellen

eines Spannungsreferenzsignals oder von Spannungsreferenzinformationen zum Berechnen eines Spannungsreferenzsignals an jede lokale Steuereinheit ($72_1$, ..., $72_q$) bei jedem Hauptsteuerzyklus, wobei das Spannungsreferenzsignal eine gewünschte Ausgangsspannungswellenform angibt;

wobei jede lokale Steuereinheit ($72_1$, ..., $72_q$) angepasst ist zum:

wahlweise Verwenden der Spannungsreferenzinformationen zum Berechnen des Spannungsreferenzsignals.

**10.** Stromwandler nach einem vorstehenden Anspruch, konfiguriert zum Bereitstellen eines Synchronisierungssignals an die Vielzahl von lokalen Steuereinheiten ($72_1$, ..., $72_q$) durch mindestens einen von dem Stromsensor (70), der Hauptsteuereinheit (74) und einer eigenständigen Synchronisierungssteuereinheit.

**11.** Stromwandler nach einem vorstehenden Anspruch, wobei die Hauptsteuereinheit (74) angepasst ist, um die Synchronisierung für den Hauptsteuerzyklus zu steuern und die Vielzahl von lokalen Steuereinheiten ($72_1$, ..., $72_q$) auf Grundlage eines Synchronisierungssignals für den lokalen Steuerzyklus zu synchronisieren.

**12.** Verfahren zum Betreiben eines Stromwandlers, umfassend:

eine Vielzahl von in Reihe geschalteten Wandlereinheiten ($52_1$, $52_2$, ..., $52_n$; $62_1$, $62_2$, ..., $62_n$), wobei jede Wandlereinheit eine Vielzahl von Halbleitervorrichtungen umfasst, wobei jede Halbleitervorrichtung mindestens einen steuerbaren Halbleiterschalter ($S_1$, $S_2$, ..., $S_4$) einschließt; und

eine Vielzahl von synchronisierten lokalen Steuereinheiten ($72_1$, ..., $72_q$), wobei jede lokale Steuereinheit mindestens einer Wandlereinheit ($52_1$, $52_2$, ..., $52_n$; $62_1$, $62_2$, ..., $62_n$) zugeordnet ist und angepasst ist, um die mindestens eine zugeordnete Wandlereinheit ($52_1$, $52_2$, ..., $52_n$; $62_1$, $62_2$, ..., $62_n$) unter Verwendung eines lokalen Steuerzyklus zu steuern; und eine Hauptsteuereinheit (74), die einen Hauptsteuerzyklus verwendet;

wobei das Verfahren die folgenden Schritte umfasst:

Bereitstellen eines Stromrückmeldesignals direkt an jede lokale Steuereinheit ($72_1$, ..., $72_q$) parallel mindestens bei jedem lokalen Steuerzyklus, wobei das Stromrückmeldesignal einen Strom angibt, der in den in Reihe geschalteten Wandlereinheiten ($52_1$, $52_2$, ..., $52_n$; $62_1$, $62_2$, ..., $62_n$) fließt, oder einen Strom, der in oder aus dem Stromwandler fließt;

wobei die Hauptsteuereinheit (74) Folgendes bereitstellt:

(i) ein Stromreferenzsignal, das einen gewünschten Strom angibt, der in den in Reihe geschalteten Wandlereinheiten ($52_1$, $52_2$, ..., $52_n$; $62_1$, $62_2$, ..., $62_n$)

fließt, oder

(ii) Stromreferenzinformationen zum Berechnen eines Stromreferenzsignals, an jede lokale Steuereinheit ($72_1$, ..., $72_q$) bei jedem Hauptsteuerzyklus,

wobei jede lokale Steuereinheit ($72_1$, ..., $72_q$) einzeln arbeitet zum:

(i) kontinuierlichen Aktualisieren des Stromreferenzsignals, das von der Hauptsteuereinheit (74) empfangen wird, oder (ii) Verwenden der Stromreferenzinformationen, die von der Hauptsteuereinheit (74) empfangen werden, um ein lokal berechnetes Stromreferenzsignal zu berechnen, das einen gewünschten Wandlerstrom angibt, der in den in Reihe geschalteten Wandlereinheiten ($52_1$, $52_2$,..., $52_n$; $62_1$, $62_2$, ..., $62_n$) fließt, und kontinuierliches Aktualisieren des lokal berechneten Stromreferenzsignals; unabhängiges Durchführen von Stromsteuerung für die zugeordnete mindestens eines Wandlereinheit ($52_1$, $52_2$, ..., $52_n$; $62_1$, $62_2$, ..., $62_n$) auf der Grundlage des Stromrückmeldesignals und des aktualisierten Stromreferenzsignals bei jedem lokalen Steuerzyklus; und

wobei die Vielzahl von lokalen Steuereinheiten ($72_1$, $72_q$) synchronisiert sind, um zusammen als einzige Steuereinheit für verteilte Stromsteuerung der Vielzahl von in Reihe geschalteten Wandlereinheiten ($52_1$, $52_2$,..., $52_n$; $62_1$, $62_2$,..., $62_n$) zu arbeiten, um eine gewünschte Stromwellenform des Stromwandlers abzuleiten;

wobei die Periode des lokalen Steuerzyklus mindestens kleiner als die Hälfte der Periode des Hauptsteuerzyklus ist;

wobei das von der Hauptsteuereinheit (74) empfangene Stromreferenzsignal oder das lokal berechnete Stromreferenzsignal ein sinusförmiges Signal ist, das dargestellt wird durch:

$$S(t) = x \cdot \cos(\theta(t)) - y \cdot \sin(\theta(t)),$$

und jede lokale Steuereinheit ($72_1$, ..., $72_q$) das Stromreferenzsignal unter Verwendung von Folgendem kontinuierlich aktualisiert oder berechnet:

Informationen bezüglich des Winkels $\theta$ zu Beginn des Hauptsteuerzyklus, Frequenzinformationen zum Aktualisieren des Winkels $\theta$ und Amplitudeninformationen bezüglich der Werte x und y, die von der Hauptsteuereinheit (74) bei jedem Hauptsteuerzyklus empfangen werden.

## Revendications

1. Convertisseur de puissance comprenant :

une pluralité d'unités de conversion ($52_1$, $52_2$, $52_n$; $62_1$, $62_2$, ..., $62_n$) connectées en série, chaque unité de conversion comprenant une pluralité de dispositifs à semi-conducteur, chaque dispositif à semi-conducteur incluant au moins un commutateur à semi-conducteur ($S_1$, $S_2$, ..., $S_4$) pouvant être commandé ;

une pluralité de dispositifs de commande locaux synchronisés ($72_1$, ..., $72_q$), chaque dispositif de commande local étant associé à au moins une unité de conversion ($52_1$, $52_2$, ..., $52_n$; $62_1$, $62_2$, ..., $62_n$) et adapté pour commander la au moins une unité de conversion ($52_1$, $52_2$, ..., $52_n$; $62_1$, $62_2$, ..., $62_n$) associée au moyen d'un cycle de commande local ;

un capteur (70) de courant adapté pour fournir un signal de rétroaction de courant directement à chaque dispositif de commande local ($72_1$, ..., $72_q$) au moins à chaque cycle de commande local, le capteur (70) de courant étant adapté pour fournir le signal de rétroaction de courant directement à chaque dispositif de commande local ($72_1$, ..., $72_q$) en parallèle par une connexion de signal (76) respective entre le capteur (70) de courant et chaque dispositif de commande local ($72_1$, ..., $72_q$), le signal de rétroaction de courant étant indicatif d'un courant s'écoulant dans les unités de conversion ($52_1$, $52_2$, ..., $52_n$; $62_1$, $62_2$, ..., $62_n$) connectées en série, ou un courant s'écoulant dans le convertisseur de puissance ou hors de celui-ci ; et

un dispositif de commande principal (74) avec un cycle de commande principal, le dispositif de commande principal (74) fournissant :

(i) un signal de référence de courant indicatif d'un courant de convertisseur souhaité,

ou

(ii) des informations de référence de courant pour calculer un signal de référence de courant,

à chaque dispositif de commande local ($72_1$, ..., $72_q$) à chaque cycle de commande principal ;

dans lequel chaque dispositif de commande local ($72_1$, ..., $72_q$) est adapté pour fonctionner individuellement afin de :

(i) mettre à jour en continu le signal de référence de courant reçu en provenance du dispositif de commande principal (74), ou (ii) utiliser les informations de référence de courant reçues en provenance du dispositif de commande principal (74) afin de calculer un signal de référence de courant calculé localement indicatif d'un courant de convertisseur souhaité et mettre à jour en continu le signal de référence de courant localement calculé ; et réaliser indépendamment une commande courant pour la au moins une unité de conversion ($52_1$, $52_2$, $52_n$ ; $62_1$, $62_2$, ..., $62_n$) associée sur la base du signal de rétroaction de courant et du signal de référence de courant mis à jour à chaque cycle de commande local ; et

dans lequel la pluralité de dispositifs de commande locaux ($72_1$, ..., $72_q$) sont synchronisés pour fonctionner ensemble en tant que dispositif de commande unique pour une commande de courant distribué de la pluralité d'unités de conversion ($52_1$, $52_2$, ..., $52_n$ ; $62_1$, $62_2$, ..., $62_n$) connectées en série afin de dériver une forme d'onde de courant souhaitée pour le convertisseur de puissance ;

dans lequel la période du cycle de commande local est au moins inférieure à la moitié de la période du cycle de commande principal ;

dans lequel le signal de référence de courant reçu en provenance du dispositif de commande principal (74), ou le signal de référence de courant calculé localement, est un signal sinusoïdal représenté par :

$$S(t)=x*\cos(\theta(t))-y*\sin(\theta(t)),$$

et chaque dispositif de commande local ($72_1$, ..., $72_q$) est adapté pour mettre à jour ou calculer en continu le signal de référence de courant en utilisant :

des informations se rapportant à l'angle $\theta$ au début du cycle de commande principal,
des informations de fréquence pour mettre à jour l'angle $\theta$ et
des informations d'amplitude se rapportant aux valeurs x et y,

reçues en provenance du dispositif de commande principal (74) à chaque cycle de commande principal.

2. Convertisseur de puissance selon la revendication 1, dans lequel les unités de conversion ($52_1$, $52_2$, ..., $52_n$ ; $62_1$, $62_2$, ..., $62_n$) sont des convertisseurs de source de tension, dans lequel chaque unité de conversion ($52_1$, $52_2$, ..., $52_n$ ; $62_1$, $62_2$, ..., $62_n$) inclut un dispositif de stockage d'énergie (C), et dans lequel chaque unité de conversion ($62_1$, $62_2$, ..., $62_n$) est facultativement connectée à une amenée d'alimentation électrique séparée.

3. Convertisseur de puissance selon une quelconque revendication précédente, dans lequel le capteur (70) de courant comprend un transducteur de courant analogique 2- f configuré pour mesurer le courant de convertisseur, et un convertisseur analogique-numérique f configuré pour transmettre le signal de rétroaction de courant.

4. Convertisseur de puissance selon une quelconque revendication précédente, configuré pour transmettre le signal de rétroaction de courant en tant que série de valeurs avec un en-tête de protocole, dans lequel l'en-tête de protocole fournit facultativement des informations indicatives d'un état de défaillance pour commander la pluralité de dispositifs de commande locaux ($72_1$, ..., $72_q$).

5. Convertisseur de puissance selon une quelconque revendication précédente, dans lequel le dispositif de commande principal (74) est adapté pour recevoir le signal de rétroaction de courant directement en provenance du capteur (70) de courant, facultativement au moyen d'une connexion de signal (76) entre le capteur (70) de courant et le dispositif de commande principal (74).

6. Convertisseur de puissance selon une quelconque revendication précédente, dans lequel chaque dispositif de commande local ($72_1$, ..., $72_q$) est associé à une pluralité d'unités de conversion ($52_1$, $52_2$, ..., $52_n$ ; $62_1$, $62_2$, ..., $62_n$) et est configuré pour recevoir un signal de rétroaction de tension en provenance de chaque unité de conversion ($52_1$, $52_2$, ..., $52_n$ ; $62_1$, $62_2$, ..., $62_n$) associée qui est indicative d'une tension CC mesurée de l'unité de conversion.

7. Convertisseur de puissance selon la revendication 8, dans lequel chaque dispositif de commande local ($72_1$, ..., $72_p$) est adapté pour utiliser les signaux de rétroaction de tension afin de calculer un signal de tension moyenne local qui est indicatif de la moyenne de la tension CC mesurée de la pluralité d'unités de conversion ($52_1$, $52_2$, ...$52_n$ ; $62_1$, $62_2$, ...$62_n$) associées à chaque dispositif de commande local ($72_1$, ...$72_p$), et

dans lequel chaque dispositif de commande local ($72_1$, ..., $72q$) est adapté pour :

réaliser une commande d'équilibrage de tension pour la au moins une unité de conversion ($52_1$, $52_2$, ..., $52_n$ ; $62_1$, $62_2$, ..., $62_n$) associée sur la base des signaux de rétroaction de tension et du signal de tension moyenne local à chaque cycle de commande local.

8. Convertisseur de puissance selon la revendication 6, dans lequel le dispositif de commande principal (74) est adapté pour fournir un signal de tension moyenne global à chaque dispositif de commande local ($72_1$, $72_q$) à chaque cycle de commande principal ou de plusieurs d'entre eux, le signal de tension moyenne global étant indicatif de la moyenne de la tension CC mesurée d'une partie ou de la totalité de la pluralité d'unités de conversion ($52_1$, $52_2$, ..., $52_n$ ; $62_1$, $62_2$, ..., $62_n$) connectées en série, et dans lequel chaque dispositif de commande local ($72_1$, ..., $72_q$) est adapté pour :

réaliser une commande d'équilibrage de tension pour la au moins une unité de conversion ($52_1$, $52_2$, ..., $52_n$ ; $62_1$, $62_2$, ..., $62_n$) associée sur la base des signaux de rétroaction de tension et du signal de tension moyenne global à chaque cycle de commande local.

9. Convertisseur de puissance selon une quelconque revendication précédente, dans lequel le dispositif de commande (74) est adapté pour fournir

un signal de référence de tension, ou des informations de référence de tension pour calculer un signal de référence de tension, à chaque dispositif de commande local ($72_1$, ..., $72_q$) à chaque cycle de commande principal, le signal de référence de tension étant indicatif d'une forme d'onde de tension de sortie souhaitée ; dans lequel chaque dispositif de commande local ($72_1$, ..., $72_q$) est adapté pour : utiliser facultativement les informations de référence de tension pour calculer le signal de référence de tension.

10. Convertisseur de puissance selon une quelconque revendication précédente, configuré pour fournir un signal de synchronisation à une pluralité de dispositifs de commande locaux ($72_1$, ..., $72_q$) par au moins l'un parmi le capteur (70) de courant, le dispositif de commande principal (74) et un dispositif de commande de synchronisation autonome.

11. Convertisseur de puissance selon une quelconque revendication précédente, dans lequel le dispositif de commande principal (74) est adapté pour commander la synchronisation pour le cycle de commande principal et pour synchroniser la pluralité de dispositifs de commande locaux ($72_1$, ..., $72_q$) sur la base d'un signal de synchronisation pour le cycle de commande local.

12. Procédé de fonctionnement d'un convertisseur de puissance comprenant :

une pluralité d'unités de conversion ($52_1$, $52_2$, ..., $52_n$ ; $62_1$, $62_2$, ..., $62_n$) connectées en série, chaque unité de conversion comprenant une pluralité de dispositifs à semi-conducteur, chaque dispositif à semi-conducteur incluant au moins un commutateur à semi-conducteur ($S_1$, $S_2$, ..., $S_4$) pouvant être commandé ; et

une pluralité de dispositifs de commande locaux synchronisés ($72_1$, ..., $72_q$), chaque dispositif de commande local étant associé à au moins une unité de conversion ($52_1$, $52_2$, ..., $52_n$; $62_1$, $62_2$, ..., $62_n$) et adapté pour commander la au moins une unité de conversion ($52_1$, $52_2$, ..., $52_n$ ; $62_1$, $62_2$, ..., $62_n$) associée en utilisant un cycle de commande local ; et un dispositif de commande principal (74) utilisant un cycle de commande principal ; le procédé comprenant les étapes consistant à :

fournir un signal de rétroaction de courant directement à chaque dispositif de commande local ($72_1$, ..., $72_q$) en parallèle à au moins chaque cycle de commande local, le signal de rétroaction de courant étant indicatif d'un courant s'écoulant dans les unités de conversion ($52_1$, $52_2$, ..., $52_n$; $62_1$, $62_2$, ..., $62_n$) connectées en série, ou un courant s'écoulant dans ou hors du convertisseur de puissance ; le dispositif de commande (74) fournissant :

(i) un signal de référence de courant indicatif d'un courant souhaité s'écoulant dans les unités de conversion ($52_1$, $52_2$,..., $52_n$; $62_1$, $62_2$,..., $62_n$) connectées en série, ou (ii) des informations de référence de courant pour calculer un signal de référence de courant,

à chaque dispositif de commande local ($72_1$, ..., $72_q$) à chaque cycle de commande principal," chaque dispositif de commande local ($72_1$, ..., $72_q$) fonctionnant individuellement pour : (i) mettre à jour en continu le signal de référence de courant reçu en provenance du dispositif de commande principal (74), ou (ii) utiliser les informations de référence de courant reçues en provenance du dispositif de commande principal (74) afin de calculer un signal de référence de courant calculé localement indicatif d'un courant de convertisseur souhaité s'écoulant dans les unités de conversion ($52_1$, $52_2$,..., $52_n$ ; $62_1$, $62_2$, ..., $62_n$) connectées en série et mettre à jour en continu le signal de référence de courant calculé localement ; réaliser indépendamment une commande courant pour la au moins une unité de conversion ($52_1$, $52_2$, ..., $52_n$ ; $62_1$, $62_2$, ..., $62_n$) associée sur la base du signal de rétroaction de courant et du signal de référence de courant mis à jour à chaque cycle de commande local ; et la pluralité de dispositifs de commande lo-

caux ($72_1$, $72_q$) étant synchronisés pour fonctionner ensemble en tant que dispositif de commande unique pour une commande de courant distribué de la pluralité d'unités de conversion ($52_1$, $52_2$, ..., $52_n$ ; $62_1$, $62_2$, ..., $62_n$) connectées en série afin de dériver une forme d'onde de courant souhaitée pour le convertisseur de puissance ;

dans lequel la période du cycle de commande local est au moins inférieure à la moitié de la période du cycle de commande principal ;

dans lequel le signal de référence de courant reçu en provenance du dispositif de commande principal (74), ou le signal de référence de courant calculé localement, est un signal sinusoïdal représenté par :

$$S(t)=x*\cos(\theta(t))-y*\sin(\theta (t)),$$

,

et chaque dispositif de commande local ($72_1$, ..., $72_q$) met à jour ou calcule en continu le signal de référence de courant en utilisant :

des informations se rapportant à l'angle $\theta$ au début du cycle de commande principal,

des informations de fréquence pour mettre à jour l'angle $\theta$ et

des informations d'amplitude se rapportant aux valeurs x et y,

reçues en provenance du dispositif de commande principal (74) à chaque cycle de commande principal.

FIG. 1

FIG. 2

EP 3 982 531 B1

FIG. 3

FIG. 4

FIG. 5

FIG. 6

FIG. 7

FIG. 8A

*FIG. 8B*

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Simple Distributed Control for Modular Multilevel Converters. **CIFTCI BARIS et al.** 21st European Conference on Power Electronics and Applications (EPE '19 ECCE Europe). EPE Association, 2019

- Control of a Modular Multilevel Converter with Reduced Internal Data Exchange. **MATHE LASZLO et al.** IEEE Transactions on Industrial Informatics. IEEE Service Center, 01 February 2017, vol. 13, 248-257
- **YANG SHUNFENG et al.** Distributed Control for a Modular Multilevel Converter. *IEEE Transactions on Power Electronics*, 01 July 2018, vol. 33 (7)